(19) **Europäisches Patentamt / European Patent Office / Office européen des brevets**

(11) **EP 4 496 388 A1**

(12) **EUROPEAN PATENT APPLICATION**
published in accordance with Art. 153(4) EPC

(43) Date of publication:
**22.01.2025 Bulletin 2025/04**

(21) Application number: **23792229.9**

(22) Date of filing: **21.04.2023**

(51) International Patent Classification (IPC):
**H04W 52/02** *(2009.01)* **H04W 8/24** *(2009.01)*
**H04W 88/08** *(2009.01)*

(52) Cooperative Patent Classification (CPC):
**H04W 8/24; H04W 52/02; H04W 88/08; Y02D 30/70**

(86) International application number:
**PCT/KR2023/005436**

(87) International publication number:
**WO 2023/204655 (26.10.2023 Gazette 2023/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.04.2022 KR 20220050406**

(71) Applicant: **SAMSUNG ELECTRONICS CO., LTD.
Yeongtong-gu
Suwon-si, Gyeonggi-do 16677 (KR)**

(72) Inventors:
• **KIM, Youngbum
Suwon-si, Gyeonggi-do 16677 (KR)**

• **YI, Junyung
Suwon-si, Gyeonggi-do 16677 (KR)**
• **RYU, Hyunseok
Suwon-si, Gyeonggi-do 16677 (KR)**
• **PARK, Kyoungmin
Suwon-si, Gyeonggi-do 16677 (KR)**
• **SHIN, Cheolkyu
Suwon-si, Gyeonggi-do 16677 (KR)**
• **JANG, Youngrok
Suwon-si, Gyeonggi-do 16677 (KR)**
• **CHOI, Seunghoon
Suwon-si, Gyeonggi-do 16677 (KR)**

(74) Representative: **Nederlandsch Octrooibureau
P.O. Box 29720
2502 LS The Hague (NL)**

(54) **METHOD AND DEVICE FOR ENERGY SAVING OF WIRELESS COMMUNICATION SYSTEM**

(57) The present disclosure relates to a 5G or 6G communication system for supporting a higher data transmission rate. The present disclosure comprises the steps of: receiving, from a terminal, a signal including UE capability information; identifying a base station mode on the basis of the UE capability information; transmitting a base station mode change signal to the terminal on the basis of the base station mode; receiving a response signal from the terminal; and changing the magnitude of the transmission power on the basis of the base station mode so as to transmit a signal to the terminal, wherein: the UE capability information includes at least one piece of support information related to an energy saving mode for a base station, control information related to a frequency band supported by the terminal, and power information related to a channel bandwidth supported by the terminal; the base station mode is either an energy saving mode related to the base station or a general mode related to the base station; and the magnitude of the transmission power is smaller in the general mode than in the energy saving mode.

EP 4 496 388 A1

START

RECEIVE SIGNAL INCLUDING UE CAPABILITY
INFORMATION FROM UE ～1701

IDENTIFY BASE STATION MODE, BASED ON UE
CAPABILITY INFORMATION ～1703

TRANSMIT BASE STATION MODE CHANGE SIGNAL TO
UE, BASED ON BASE STATION MODE ～1705

RECEIVE RESPONSE SIGNAL FROM UE ～1707

CHANGE SIZE OF TRANSMISSION POWER, BASED ON
BASE STATION MODE, AND TRANSMIT SIGNAL TO UE ～1709

END

FIG.17

**Description**

[Technical Field]

The disclosure relates to a communication method of a wireless communication system and, in particular, to a method and a device for energy saving in a wireless communication system.

[Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave such as 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with extended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the advance of mobile communication systems as described above, various services can be provided, and accordingly there is a need for ways to effectively provide these services, in particular, ways to provide methods and devices for power saving in wireless communication system.

[Disclosure of Invention]

[Technical Problem]

A disclosed embodiment is to provide a method and a device enabling effective provision of a service in a mobile communication system.

[Solution to Problem]

The disclosure provides a method performed by a base station in a wireless communication system, the method including receiving, from a terminal, a signal including terminal capability (UE capability) information, identifying a base station mode, based on the terminal capability information, transmitting a base station mode change signal to the terminal, based on the base station mode, receiving a response signal from the terminal, and changing a size of transmission power, based on the base station mode, and transmitting a signal to the terminal, wherein the terminal capability information includes at least one of support information on an energy saving mode for the base station, control information related to a frequency band supported by the terminal, and power information on a channel bandwidth supported by the terminal, the base station mode is one of the energy saving mode for the base station or the normal mode for the base station, and the size of the transmission power is smaller in the normal mode than in the energy saving mode.

[Advantageous Effects of Invention]

A disclosed embodiment provides a method and a device enabling effective provision of a service in a mobile communication system.

[Brief Description of Drawings]

FIG. 1 is a diagram illustrating a basic structure in a time-frequency resource region of a 5G system according to an embodiment of the disclosure;
FIG. 2 is a diagram illustrating a beam sweeping operation and a time domain mapping structure of a synchronization signal according to an embodiment of the disclosure.
FIG. 3 is a diagram illustrating a random access procedure according to an embodiment of the disclosure;
FIG. 4 is a diagram illustrating a procedure in a terminal reports UE capability information to a base station according to an embodiment of the disclosure;
FIG. 5 is a diagram illustrating a correlation between a frequency band, a coverage, and a bandwidth according to an embodiment of the disclosure;
FIG. 6 is a diagram illustrating a base station placement scenario according to an embodiment of the disclosure;
FIG. 7 is a diagram illustrating a base station placement scenario according to an embodiment of the disclosure;
FIG. 8 is a diagram illustrating a correlation between downlink signal transmission power configurations according to an embodiment of the disclosure;
FIG. 9 is a diagram illustrating adjustment of transmission power for each CSI-RS resource according to an embodiment of the disclosure;
FIG. 10 is a diagram illustrating a measurement reporting procedure of a terminal according to an embodiment of the disclosure;
FIG. 11 is a diagram illustrating a terminal procedure according to a change of downlink signal transmission power according to an embodiment of the disclosure;
FIG. 12 is a flowchart for describing a terminal procedure according to an embodiment of the disclosure;
FIG. 13 is a flowchart for describing a base station procedure according to an embodiment of the disclosure;
FIG. 14 is a diagram illustrating a terminal transceiver according to an embodiment of the disclosure;
FIG. 15 is a block diagram illustrating a structure of a UE according to an embodiment of the disclosure.
FIG. 16 is a block diagram illustrating a structure of a base station according to an embodiment of the disclosure.
FIG. 17 is a flowchart for describing a base station procedure according to an embodiment of the disclosure.

[Mode for Carrying out the Invention]

Hereinafter, embodiments of the disclosure will be described in detail with reference to the accompanying drawings. In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

The advantages and features of the disclosure and ways to achieve them will be apparent by making reference to embodiments as described below in detail in conjunction with the accompanying drawings. Furthermore, the size of each element does not completely reflect the actual size. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in the embodiments may include one or more processors.

In the following description of the disclosure, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

In the following description, terms referring to signals, terms referring to channels, terms referring to control information, terms referring to network entities, terms referring to device elements, and the like are illustratively used for the sake of descriptive convenience. Therefore, the disclosure is not limited by the terms as described below, and other terms referring to subjects having equivalent technical meanings may also be used.

In the following description, the terms "physical channel" and "signal" may be interchangeably used with the term "data" or "control signal". For example, the term "physical downlink shared channel (PDSCH)" refers to a physical channel over which data is transmitted, but the PDSCH may also be used to refer to the "data". That is, in the disclosure, the expression "transmit ting a physical channel" may be construed as having the same meaning as the expression "transmitting data or a signal over a physical channel".

In the following description of the disclosure, upper signaling refers to a signal transfer scheme from a base station to a terminal via a downlink data channel of a physical layer, or from a terminal to a base station via an uplink data channel of a physical layer. The upper signaling may also be understood as radio resource control (RRC) signaling or a media access control (MAC) control element (CE).

In the following description, terms and names defined in the 3GPP new radio standards (3GPP NR: 5th generation mobile communication standards) are used for the sake of descriptive convenience. However, the disclosure is not limited by these terms and names, and may be applied in the same way to systems that conform other standards. In addition, the term "terminal" may refer to not only cellular phones, smartphones, IoT devices, and sensors, but also other wireless communication devices.

In the following description, a base station is an entity that allocates resources to terminals, and may be at least one of a gNode B, a gNB, an eNode B, an eNB, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. Of course, examples of the base station and the terminal are not limited to those mentioned above.

In order to handle the current explosive increase in mobile data traffic, an initial standard for a new radio access technology (NR) or a 5th generation (5G) system, which is a next generation communication system, following long-term evolution (LTE or evolved universal terrestrial radio access (E-UTRA)) and LTE-advanced (LTE-A) or E-UTRA evolution) has been completed. Unlike traditional mobile communication systems that have focused primarily on conventional voice/data communication, the 5G system aims to meet a wide range of services and requirements, for improvement of conventional voice/data communication, including an enhanced mobile broadband (eMBB) service, an ultra-reliable and low latency communication (URLLC) service, and a massive machine type communication (MTC) service supporting a large amount of machine type communication.

While the system transmission bandwidth per carrier in existing LTE and LTE-A is limited to a maximum of 20 MHz, the 5G system mainly aims to provide an ultra-high-speed data service reaching several Gbps by utilizing a much wider ultra-wide bandwidth. Consequently, the 5G system considers, as candidate frequencies, an ultra-high frequency band ranging from several GHz to a maximum of 100 GHz, where securing ultra-wide bandwidth frequencies is relatively easier. Additionally, it is possible to secure wide bandwidth frequencies for the 5G system through frequency rearrangement or allocation within frequency bands used in traditional mobile communication systems, which range from several hundred MHz to several GHz.

A radio wave of ultra-high frequency bands has a wavelength of several millimeters and thus is also referred to as a millimeter wave (mmWave). However, in the ultra-high frequency bands, the pathloss of radio waves increases in proportion to the frequency bands, resulting in reduced coverage for mobile communication systems.

To overcome the disadvantage of reduced coverage in ultra-high frequency bands, beamforming technology is applied, which uses multiple antennas to concentrate the radiation energy of radio waves towards a predetermined target point, thereby increasing the propagation distance of the radio waves. In other words, a signal employing the beamforming technology has a relatively narrow beam width, and the radiation energy thereof is concentrated within the narrow beam width, increasing the propagation distance of the radio wave. The beamforming technology may be applied to each of a transmission node and a reception node. The beamforming technology may reduce interference in a region not including a beamforming direction as well as increasing coverage. For proper operation of the beamforming technology, a method of accurate measurement of transmission/reception beams and feedback therefor is required. The beamforming technology may be applied to a control channel or data channel in one-to-one correspondence with and between a predetermined terminal and a base station. In addition, the beamforming terminal may also be applied, for coverage improvement, to a control channel and a data channel for transmitting a common signal, for example, a synchronization signal, a broadcast channel (a physical broadcast channel (PBCH), or system information, which is transmitted by a base station to multiple terminals in a system. When the beamforming technology is applied to a common signal, beam sweeping technology of transmitting a signal by changing a beam direction may be additionally applied so that the common signal is able to reach a terminal existing on a random position in a cell.

As another requirement of the 5G system, an ultra-low latency service having about 1 ms of a transmission delay between transmission and reception nodes is being required. As one method for reducing transmission delays, a frame structure design based on a short transmission time interval (TTI) compared to LTE and LTE-A is needed. A TTI is a basic time unit for scheduling, and the TTI of conventional LTE and LTE-A systems is 1 ms corresponding to the length of one subframe. For example, in the 5G system, a TTI of 0.5 ms, 0.25 ms, or 0. 125 ms shorter than that of the conventional LTE and LTE-A systems is possible, based on the short TTI for satisfying the requirement for the ultra-low latency service.

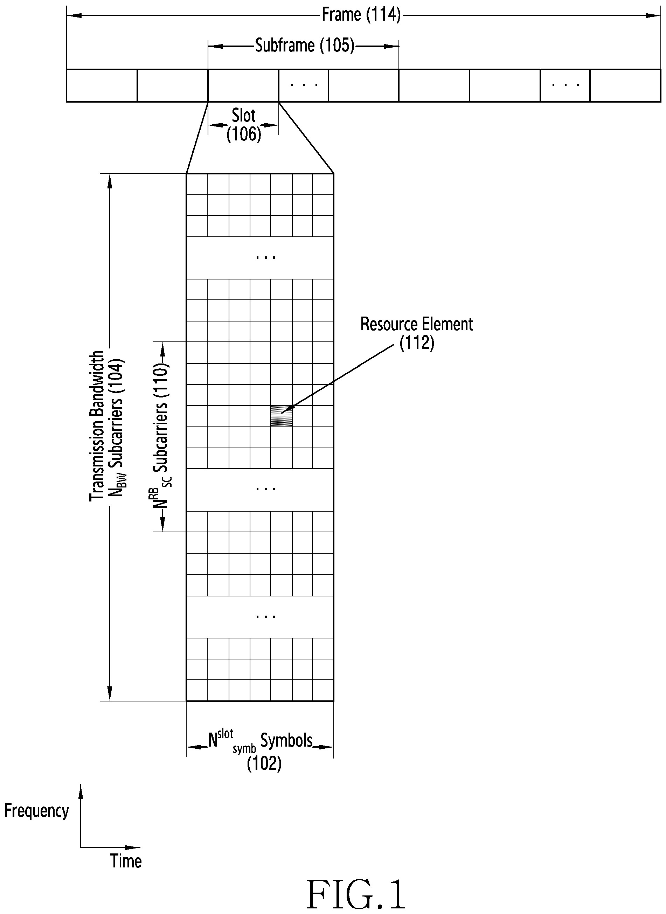

FIG. 1 is a diagram illustrating a basic structure in a time-frequency resource region of a 5G system according to an embodiment of the disclosure. That is, FIG. 1 is a diagram illustrating a basic structure of a time-frequency resource region which is a wireless resource region in which data or a control channel of a 5G system is transmitted.

Referring to FIG. 1, the transverse axis of FIG. 1 indicates a time domain, and the longitudinal axis indicates a frequency domain. A minimum transmission unit of the time domain of the 5G system is an orthogonal frequency division multiplexing (OFDM) symbol, $N_{symb}^{slot}$ symbols 102 configures one slot 106, and $N_{slot}^{subframe}$ slots may configure one subframe 105. The length of the one subframe 105 is 1.0 ms, and 10 subframes may configure a 10 ms frame 114. A minimum transmission unit of the frequency domain is a subcarrier, and the bandwidth of the entire system transmission band (transmission bandwidth) may be configured by a total of NBW subcarriers 104.

A basic unit of resources in the time-frequency domain is a resource element (RE) 112 and may be represented by an OFDM symbol index and a subcarrier index. A resource block (RB) (or a physical resource block (PRB)) may be defined by consecutive $N_{sc}^{RB}$ subcarriers 110 in the frequency domain. In the 5G system, $N_{sc}^{RB}$ is equal to 12, and a data rate may increase in proportion to the number of RBs scheduled for a terminal.

In the 5G system, a base station maps data in the unit of RBs and, in general, may schedule RBs configuring one slot for a predetermined terminal. That is, a basic time unit in which scheduling is performed in the 5G system is a slot, and a basic frequency unit in which scheduling is performed may be an RB. $N_{symb}^{slot}$, the number of OFDM symbols, is determined according to the length of a cyclic prefix (CP) added to each symbol for prevention of interference between symbols. For example, if a normal CP is applied, $N_{symb}^{slot}$ is equal to 14, and if an extended CP is applied, $N_{symb}^{slot}$ may be equal to 12. An extended CP is applied to a system having a relatively longer radio transmission distance, compared to a normal CP, so as to maintain orthogonality between symbols. In a case of a normal CP, a ratio between a CP length and a symbol length is maintained to be a particular value, whereby the overhead caused by the CP may be maintained to be constant regardless of a subcarrier spacing. That is, the smaller the subcarrier spacing, the longer the symbol length, and consequently, the CP length may be longer. On the contrary, the larger the subcarrier spacing, the shorter the symbol length, and consequently, the CP length may be smaller. The symbol length and the CP length may be inversely proportional to the subcarrier spacing.

In the 5G system, various frame structures may be supported by adjusting a subcarrier spacing so as to satisfy various services and requirements. For example,

**[0034]** - In view of operating frequency bands, the larger the subcarrier spacing, the more advantageous for restoring the phase noise of a high-frequency band.

**[0035]** - In view of transmission time, the larger the subcarrier spacing, the shorter the symbol length in the time domain, and consequently, the slot length is also shorter and thus it is advantageous to support an ultra-low-latency service such as URLLC.

**[0036]** - In view of cell size, the longer the CP length, the larger the cell that is supportable. Therefore, the smaller the subcarrier, the relatively larger the cell that may be supported. A cell in mobile communication has a concept indicating an area covered by one base station.

Each of subcarrier spacing, CP length, etc. is essential information for OFDM transmission and reception, and is required to be recognized as the same value by a base station and a terminal, so that smooth transmission and reception is possible. [Table 1] shows a relation between a subcarrier spacing configuration (μ), a subcarrier spacing (Δf), and a CP length supported in the 5G system.

[Table 1]

| μ | $\Delta f = 2^{\mu} \cdot 15$[kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

[Table 2] shows the number ($N_{symb}^{slot}$) of symbols per slot, the number ($N_{slot}^{frame,\mu}$) of slots per frame, and the number ($N_{slot}^{subframe,\mu}$) of slots per subframe for each subcarrier spacing configuration (μ) in a case of a normal CP.

[Table 2]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |

(continued)

| μ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 3 | 14 | 80 | 8 |
| 4 | 14 | 160 | 16 |

[Table 3] shows the number ( $N_{symb}^{slot}$ ) of symbols per slot, the number ( $N_{\text{slot}}^{\text{frame},\mu}$ ) of slots per frame, and the number ( $N_{\text{slot}}^{\text{subframe},\mu}$ ) of slots per subframe for each subcarrier spacing configuration (μ) in a case of an extended CP.

[Table 3]

| μ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 2 | 12 | 40 | 4 |

In the initial stage of introducing the 5G system, at least the coexistence with a conventional LTE and/or LTE-A (hereinafter, LTE/LTE-A) system, or operation in a dual mode is expected. Accordingly, the conventional LTE/LTE-A may provide a stable system operation to a terminal, and the 5G system may function to provide an enhanced service to the terminal. Therefore, a frame structure of the 5G system is required to include at least a frame structure of LTE/LTE-A or an essential parameter set (subcarrier spacing = 15 kHz).

For example, when a frame structure having a subcarrier spacing configuration μ=0 (hereinafter, frame structure A) and a frame structure having a subcarrier spacing configuration μ=1 (hereinafter, frame structure B) are compared, frame structure B has a subcarrier spacing and an RB size twice those of frame structure A, and has a slot length and a symbol length half of those of frame structure A. In case of frame structure B, two slots configure one subframe and 20 subframes may configure one frame.

When the frame structure of the 5G system is normalized, each of subcarrier spacing, CP length, slot length, etc., which are included in an essential parameter set, has an integer multiple relation between frame structures. Therefore, high expandability is provided. Furthermore, in order to express a reference time unit regardless of the frame structure, a subframe having a fixed length of 1 ms may be defined.

The frame structure of the 5G system may be applied to correspond to various scenarios. In view of cell size, the longer the CP length, the larger the cell that is supportable. Therefore, frame structure type A may support a relatively larger cell compared to frame structure type B. In view of operating frequency bands, the larger the subcarrier spacing, the more advantageous for restoring the phase noise of a high frequency band. Therefore, frame structure B may support a relatively higher operating frequency compared to frame structure A. In view of service, the shorter the slot length, which is a basic time unit of scheduling, the more advantageous for supporting an ultra-low-latency service, such as URLLC. Therefore, frame structure B may be relatively more suitable for URLLC service compared to frame structure A.

As used in the following description of the disclosure, the uplink may refer to a radio link via which a user equipment transmits data or control signals to a base station, and the downlink may refer to a radio link via which the base station transmits data or control signals to the user equipment.

In an initial access step in which a user equipment initially accesses a system, the user equipment may perform downlink time and frequency domain synchronization and acquire a cell identifier (ID) from a synchronization signal, transmitted by a base station, through a cell search. In addition, the user equipment may receive a physical broadcast channel (PBCH) by using the acquired cell ID and acquire a master information block (MIB) as mandatory system information from the PBCH. Additionally, the user equipment may receive system information (system information block (SIB)) transmitted by the base station to acquire cell-common transmission and reception-related control information. The cell-common transmission and reception-related control information may include random access-related control information, paging-related control information, common control information for various physical channels, etc.

A synchronization signal is a signal that serves as a reference for a cell search, and for each frequency band, a subcarrier spacing may be applied adaptively to a channel environment, such as phase noise. For a data channel or a control channel, in order to support various services as described above, a subcarrier spacing may be applied differently depending on a service type.

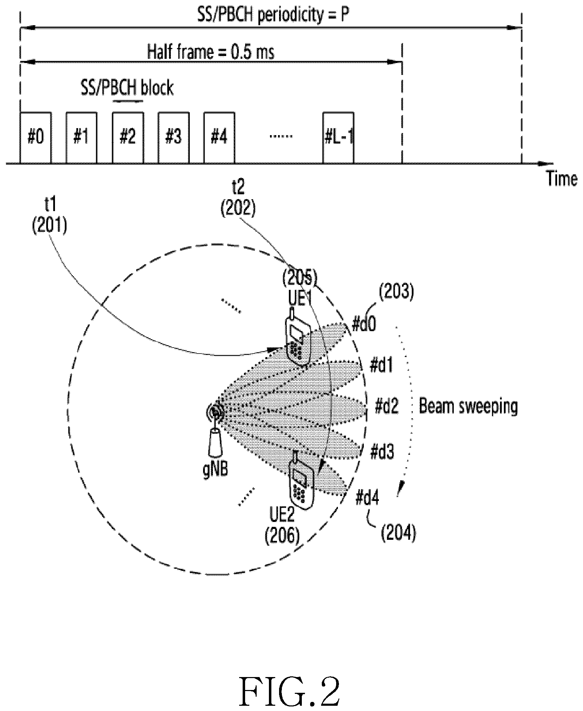

FIG. 2 illustrates a beam sweeping operation and a time domain mapping structure of a synchronization signal according to an embodiment of the disclosure.

For the sake of description, the following elements may be defined.

- Primary synchronization signal (PSS): A PSS is a signal that serves as a reference for DL time/frequency synchronization, and provides a part of cell ID information.
- Secondary synchronization signal (SSS): An SSS serves as a reference for DL time/frequency synchronization, and provides the other part of the cell ID information. Additionally, the SSS may serve as a reference signal for PBCH demodulation of a PBCH.
- Physical broadcast channel (PBCH): A PBCH provides a master information block (MIB) which is mandatory system information required for transmission and reception of a data channel and a control channel of a user equipment. The mandatory system information may include search space-related control information indicating radio resource mapping information of a control channel, scheduling control information for a separate data channel for transmission of system information, a system frame number (SFN) which is a frame unit index that serves as a timing reference, and other information.
- Synchronization signal/PBCH block (SS/PBCH block or SSB): An SS/PBCH block is configured by N OFDM symbols and includes a combination of a PSS, an SSS, a PBCH, and the like. For a system to which a beam sweeping technology is applied, an SS/PBCH block is a minimum unit to which beam sweeping is applied. In the 5G system, N=4 may be satisfied. A base station may transmit up to a maximum of L SS/PBCH blocks, and the L SS/PBCH blocks are mapped within a half frame (0.5ms). In addition, the L SS/PBCH blocks are periodically repeated at predetermined periods P. The base station may inform a user equipment of period P via signaling. If there is no separate signaling of period P, the user equipment may apply a previously agreed default value. Each SS/PBCH block has an SS/PBCH block index ranging from 0 to maximum L-1, and the user equipment may know the SS/PBCH block index through SS/PBCH detection.

Referring to FIG. 2, FIG. 2 illustrates an example in which beam sweeping is applied in units of SS/PBCH blocks over time. In the example of FIG. 2, user equipment (UE) 1 205 receives an SS/PBCH block by means of a beam emitted in direction #d0 203 by beamforming applied to SS/PBCH block #0 at time point t1 201. In addition, UE 2 206 receives an SS/PBCH block by means of a beam emitted in direction #d4 204 by beamforming applied to SS/PBCH block #4 at time point t2 202. The UE may acquire, from the base station, an optimal synchronization signal via a beam emitted in the direction where the UE is located. For example, it may be difficult for UE 1 205 to acquire time/frequency synchronization and mandatory system information from the SS/PBCH block through the beam emitted in direction #d4 far away from the location of UE 1.

In addition to the initial access procedure, for the purpose of determining whether the radio link quality of a current cell is maintained at a certain level or higher, the UE may also receive the SS/PBCH block. Furthermore, during a handover procedure in which the UE moves access from the current cell to an adjacent cell, the UE may receive an SS/PBCH block of the adjacent cell in order to determine the radio link quality of the adjacent cell and acquire time/frequency synchronization with the adjacent cell. After acquiring an MIB and system information from the base station through the initial access procedure, the UE may perform a random access procedure in order to switch a link to the base station to a connected state (or RRC_CONNECTED state). Upon completing the random access procedure, the UE switches to a connected state in which one-to-one communication between the base station and the UE is possible.

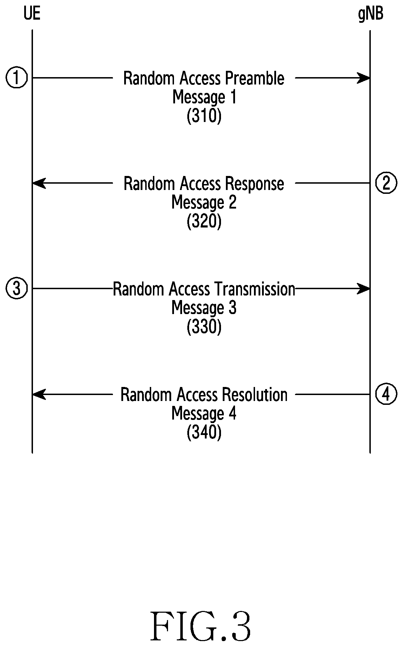

hereinafter, random access procedure will be described in detail with reference to FIG. 3.

FIG. 3 is a diagram illustrating a random access procedure according to an embodiment of the disclosure.

Referring to FIG. 3, as a first operation 310 of a random access procedure, a UE may transmit a random access preamble to a base station. The random access preamble, which is the initial transmission message of the UE in the random access procedure, may be called message 1. The base station may measure a transmission delay value between the UE and the base station by using the random access preamble, and perform uplink synchronization. The UE may randomly select a random access preamble to be used, in a random access preamble set given by system information in advance. The initial transmission power of the random access preamble may be determined by a pathloss, measured by the UE, between the base station and the UE. In addition, the UE may determine a transmission beam direction of the random access preamble by using a synchronization signal received from the base station, and transmit the random access preamble.

In a second operation 320, the base station may transmit an uplink transmission timing adjustment command to the UE, based on the transmission delay value measured using the random access preamble received in the first operation 310. In addition, the base station may transmit an uplink resource to be used by the UE and a power control command as scheduling information. The scheduling information may include control information on an uplink transmission beam of the UE.

If the UE fails to receive a random access response (RAR) (or message 2), which is scheduling information for message 3, from the base station within a predetermined time in the second operation 320, the first operation 310 may be proceeded again. If the first step 310 is proceeded again, the UE may increase the transmission power of the random access preamble by a predetermined step and transmit same (power ramping), thereby increasing the probability that the base station receives the random access preamble.

In a third operation 330, the UE transmits uplink data (message 3) including a UE ID of the UE to the base station through an uplink data channel (physical uplink shared channel (PUSCH) by using the uplink resource allocated in the second operation 320. A timing of transmitting the uplink data channel for transmitting message 3 may follow the timing control command received from the base station in the second operation 320. In addition, the transmission power of the uplink data channel for transmitting message 3 may be determined in consideration of a power ramping value of the random access preamble and the power control command received from the base station in the second operation 320. The uplink data channel for transmitting message 3 may mean an initial uplink data signal transmitted by the UE to the base station after the UE transmits the random access preamble.

In a fourth operation 340, when it is determined that the UE has performed a random access without collision with another UE, the base station may transmit, to the UE, data (message 4) including the ID of the UE having transmitted the uplink data in the third operation 330. When a signal transmitted by the base station in the fourth operation 340 is received from the base station, the UE may determine that the random access has succeeded. Thereafter, the UE may transmit HARQ-ACK/NACK information indicating whether message 4 has been successfully received, to the base station through an uplink control channel (physical uplink control channel (PUCCH)).

If the data transmitted by the UE in the third operation 330 collides with data of another UE and thus the base station fails to receive a data signal from the UE, the base station may not perform data transmission to the UE any more. Accordingly, when the UE fails to receive the data, which is transmitted in the fourth operation 340, from the base station within a predetermined time, the UE may determine that the random access procedure has failed, and restart from the first operation 310.

If the random access procedure is successfully completed, the UE is switched to a connected state and one-to-one communication between the base station and the UE becomes possible. The base station may receive UE capability information reported by the UE being in the connected state, and adjust scheduling by referring to the UE capability information of the UE. The UE may notify, through the UE capability information, the base station of whether the UE supports a predetermined function, a maximum allowable value of the function supported by the UE, etc. Therefore, UE capability information reported by the UE to the base station may have a different value for each UE.

For example, the UE may report, to the base station, UE capability information including at least some of the following pieces of control information as UE capability information.

- Control information related to a frequency band supported by the UE
- Control information related to a channel bandwidth supported by the UE
- Control information related to a maximum modulation scheme supported by the UE
- Control information related to a maximum number of beams supported by the UE
- Control information related to a maximum number of layers supported by the UE
- Control information related to CSI reporting supported by the UE
- Control information relating to whether the UE supports frequency hopping
- Control information related to a bandwidth when carrier aggregation (CA) is supported
- Control information related to whether cross carrier scheduling is supported when carrier aggregation is supported

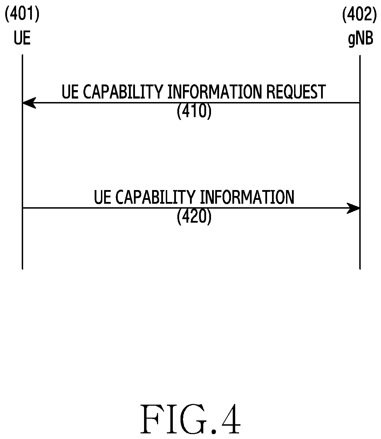

FIG. 4 is a diagram illustrating a procedure in a UE reports UE capability information to a base station according to an embodiment of the disclosure.

Referring to FIG. 4, in operation 410, a base station 402 may transmit a UE capability information request message to a UE 401. The UE transmits UE capability information to the base station in operation 420 in response to a UE capability information request.

Hereinafter, a scheduling method of transmitting, by a base station, downlink data to a UE or indicating uplink data transmission of the UE is described.

Downlink control information (DCI) is control information transmitted by a base station to a UE through downlink, and may include downlink data scheduling information or uplink data scheduling information for a predetermined UE. In general, a base station may perform channel coding of DCI independently for each UE and then transmit the DCI to each UE through a physical downlink control channel (PDCCH) that is a downlink physical control channel.

A base station may manage a UE to be subject to scheduling by applying a predetermined DCI format according to a purpose, such as whether scheduling information is scheduling information (downlink assignment) for downlink data, scheduling information (uplink grant) for uplink data, or DCI for power control.

A base station may transmit downlink data to a UE through a physical downlink shared channel (PDSCH) that is a physical channel for downlink data transmission. Scheduling information, such as a specific mapping position of a PDSCH in the time and frequency domain, a modulation scheme, HARQ-related control information, and power control information, may be notified of to the UE by the base station through a piece of DCI related to downlink data scheduling information among pieces of DCI transmitted through a PDCCH.

A UE may transmit uplink data to a base station through a physical uplink shared channel (PUSCH) that is a physical channel for uplink data transmission. Scheduling information, such as a specific mapping position of a PUSCH in the time and frequency domain, a modulation scheme, HARQ-related control information, and power control information, may be notified of to the UE by the base station through a piece of DCI related to uplink data scheduling information among pieces of DCI transmitted through a PDCCH.

A time-frequency resource to which a PDCCH is mapped is called a control resource set (CORESET). A CORESET may be configured on all or some of frequency resources of a bandwidth supported by a UE in the frequency domain. In the time domain, a CORESET may be configured to be one or multiple OFDM symbols, and the symbols may be defined as a CORESET duration. A base station may configure, for a UE, one or multiple CORESETs through higher layer signaling (e.g., system information, master information block (MIB), and radio resource control (RRC) signaling). Configuring a CORESET for a UE may mean providing information such as a CORESET identifier (identity), the frequency position of the CORESET, the symbol length of the CORESET, etc. Pieces of information provided by a base station to a UE to configure a CORESET may include at least some of pieces of information included in <Table 4>.

[Table 4]

```
ControlResourceSet ::=          SEQUENCE {
    controlResourceSetId          ControlResourceSetId,
    (CORESET identifier)
    frequencyDomainResources       BIT STRING (SIZE (45)),
    (Frequency domain resource)
    duration                      INTEGER (1..maxCoReSetDuration),
    (CORESET duration)
    cce-REG-MappingType            CHOICE {
    (CCE-to-REG mapping type)
        interleaved                SEQUENCE {
            reg-BundleSize         ENUMERATED {n2, n3, n6},
            (REG bundle size)
            interleaverSize       ENUMERATED {n2, n3, n6},
            (Interleaver size)
            shiftIndex            INTEGER(0..maxNrofPhysicalResourceBlocks-1)
OPTIONAL -- Need S
            (Interleaver shift)
```

```
        },
        nonInterleaved                    NULL
    },


    precoderGranularity                ENUMERATED  {sameAsREG-bundle,
allContiguousRBs},
    (Precoding unit)
    tci-StatesPDCCH-ToAddList          SEQUENCE(SIZE  (1..maxNrofTCI-
StatesPDCCH)) OF TCI-StateId OPTIONAL, -- Cond NotSIB1-initialBWP
    (QCL configuration information)
    tci-StatesPDCCH-ToReleaseList      SEQUENCE(SIZE  (1..maxNrofTCI-
StatesPDCCH)) OF TCI-StateId OPTIONAL, -- Cond NotSIB1-initialBWP
    (QCL configuration information)
    tci-PresentInDCI                             ENUMERATED  {enabled}
OPTIONAL, -- Need S
    (QCL indicator configuration information in DCI)
    pdcch-DMRS-ScramblingID                      INTEGER  (0..65535)
OPTIONAL, -- Need S
    (PDCCH DMRS scrambling identifier)


}
```

A CORESET may be configured by $N_{RB}^{CORESET}$ RBs in the frequency domain, and may be configured by $N_{symb}^{CORESET} \in \{1,2,3\}$ symbols in the time domain. An NR PDCCH may be configured by one or multiple control channel elements (CCEs). One CCE may be configured by six resource element groups (REGs), and a REG may be defined as one RB for one OFDM symbol. In one control resource set, REGs may be indexed in a time-first sequence, starting from REG index 0 for the first OFDM symbol and the lowest RB in the control resource set.

An interleaving scheme and a non-interleaving scheme may be supported as a PDCCH transmission method. A base station may configure, for a UE through higher layer signaling, whether interleaving or non-interleaving transmission is performed for each CORESET. Interleaving may be performed in the unit of REG bundles. An REG bundle may be defined as a set of one or multiple REGs. A UE may determine a scheme described in <Table 5> below as a scheme of CCE-to-REG mapping in a corresponding CORESET, based on whether interleaving or non-interleaving transmission is performed, configured by a base station.

[Table 5

| |
| --- |
| The CCE-to-REG mapping for a control-resource set can be interleaved or non-interleaved and is described by REG bundles:<br>REG bundle $i$ is defined as REGs $\{iL,iL+1,...,iL+L-1\}$ where L is the REG bundle size,<br>$i = 0,1,...,N_{REG}^{CORESET}/L - 1$, and $N_{REG}^{CORESET} =$ is the number of REGs in the CORESET symb<br>CCE $j$ consists of REG bundles $\{f(6j/L),f(6j/L+1),...,f(6j/L+6/L-1)\}$ where $f(\cdot)$ is an interleaver<br>For non-interleaved CCE-to-REG mapping, $L = 6$ and $f(x) = x$. |

(continued)

For interleaved CCE-to-REG mapping, $L \in \{2,6\}$ for $N_{\text{symb}}^{\text{CORESET}} = 1$ and $L \in \{N_{\text{symb}}^{\text{CORESET}}, 6\}$ for $N_{\text{symb}}^{\text{CORESET}} \in \{2,3\}$. The interleaver is defined by

$$f(x) = (rC + c + n_{\text{shift}}) \bmod \left( N_{\text{REG}}^{\text{CORESET}} / L \right)$$

$$x = cR + r$$
$$r = 0,1,...,R - 1$$
$$c = 0,1, ... , C - 1$$

$$C = N_{\text{REG}}^{\text{CORESET}} / (LR)$$

where $R \in \{2,3,6\}$.

A base station may notify, through signaling, a UE of configuration information, such as a symbol to which a PDCCH is mapped in a slot, a transmission period, etc.

A search space of a PDCCH is described as follows. The number of CCEs required for transmitting a PDCCH may be 1, 2, 4, 8, and 16 according to an aggregation level (AL), and different numbers of CCEs may be used for link adaptation of a downlink control channel. For example, if an AL is equal to L, one downlink control channel may be transmitted through L number of CCEs. A UE performs blind decoding wherein a signal is detected without knowing information about a downlink control channel, and a search space indicating a set of CCEs may be defined therefor. A search space is a set of downlink control channel candidates configured by CCEs to which a UE is required to attempt to decode at a given aggregation level. Since there are various aggregation levels making 1, 2, 4, 8, and 16 CCEs into one bundle, a UE may have a plurality of search spaces. A search space set may be defined as a set of search spaces at all configured aggregation levels.

A search space may be classified as a common search space (CSS) and a UE-specific search space (USS). A particular group of UEs or all UEs may investigate a common search space for a PDCCH to receive cell-common control information such as a paging message or dynamic scheduling for a system information block (SIB). For example, a UE may receive PDSCH scheduling assignment information for reception of system information by investigating a common search space of a PDCCH. In a case of a common search space, a particular group of UEs or all UEs are required to receive a PDCCH, and thus the common search space may be defined as a pre-promised set of CCEs. Scheduling assignment information for a UE-specific PDSCH or PUSCH may be received by investigating, by a UE, a UE-specific search space of a PDCCH. A UE-specific search space may be defined UE-specifically by using a function of various system parameters and an identity (ID) of a UE.

A base station may configure, for a UE, configuration information for a search space of a PDCCH through higher layer signaling (e.g., SIB, MIB, and RRC signaling). For example, a base station may configure, for a UE, the number of PDCCH candidates at each aggregation level L, a monitoring period for a search space, a monitoring occasion in the units of symbols in a slot of the search space, a search space type (common search space or UE-specific search space), a combination of an RNTI and a DCI format to be monitored in the search space, and the index of a CORESET in which the search space is to be monitored. For example, a parameter related to a search space for a PDCCH may include pieces of information as in <Table 6> below.

[Table 6]

```
SearchSpace ::=                      SEQUENCE {
    searchSpaceId                    SearchSpaceId,
    (Search space identifier)
    controlResourceSetId                              ControlResourceSetId
OPTIONAL,    -- Cond SetupOnly
    (CORESET identifier)
    monitoringSlotPeriodicityAndOffset CHOICE {
    (Monitoring slot level period and offset)
        sl1                          NULL,
        sl2                          INTEGER (0..1),
        sl4                          INTEGER (0..3),
```

```
        sl5                        INTEGER (0..4),
        sl8                        INTEGER (0..7),
        sl10                       INTEGER (0..9),
        sl16                       INTEGER (0..15),
        sl20                       INTEGER (0..19),
        sl40                       INTEGER (0..39),
        sl80                       INTEGER (0..79),
        sl160                      INTEGER (0..159),
        sl320                      INTEGER (0..319),


        sl640                      INTEGER (0..639),
        sl1280                     INTEGER (0..1279),
        sl2560                     INTEGER (0..2559)
    }
OPTIONAL,    -- Cond Setup
    duration                       INTEGER                      (2..2559)
OPTIONAL,    -- Need R
    (Monitoring length)
    monitoringSymbolsWithinSlot             BIT  STRING  (SIZE  (14))
OPTIONAL,    -- Cond Setup
    (Position of monitoring symbol in slot)
    nrofCandidates                 SEQUENCE {
    (Number of PDCCH candidates for each aggregation level)
        aggregationLevel1          ENUMERATED {n0, n1, n2, n3, n4, n5,
n6, n8},
        aggregationLevel2          ENUMERATED {n0, n1, n2, n3, n4, n5,
n6, n8},
        aggregationLevel4          ENUMERATED {n0, n1, n2, n3, n4, n5,
n6, n8},


        aggregationLevel8          ENUMERATED {n0, n1, n2, n3, n4, n5,
n6, n8},
        aggregationLevel16         ENUMERATED {n0, n1, n2, n3, n4, n5,
n6, n8}
```

```
        }
OPTIONAL,     -- Cond Setup
    searchSpaceType                    CHOICE {
    (Search space type)
        common                         SEQUENCE {
        (Common search space)
            dci-Format0-0-AndFormat1-0     SEQUENCE {
            ...
            }
OPTIONAL,    -- Need R
            dci-Format2-0              SEQUENCE {
                nrofCandidates-SFI         SEQUENCE {
                    aggregationLevel1         ENUMERATED {n1, n2}
OPTIONAL,    -- Need R
                    aggregationLevel2         ENUMERATED {n1, n2}
OPTIONAL,    -- Need R


                    aggregationLevel4         ENUMERATED {n1, n2}
OPTIONAL,    -- Need R
                    aggregationLevel8         ENUMERATED {n1, n2}
OPTIONAL,    -- Need R
                    aggregationLevel16        ENUMERATED {n1, n2}
OPTIONAL     -- Need R
                },
                ...
            }
OPTIONAL,    -- Need R
            dci-Format2-1              SEQUENCE {
            ...
            }
OPTIONAL,     -- Need R
            dci-Format2-2              SEQUENCE {
            ...
            }
OPTIONAL,     -- Need R
```

```
            dci-Format2-3                    SEQUENCE {

                dummy1                           ENUMERATED {sl1, sl2, sl4,
sl5, sl8, sl10, sl16, sl20}  OPTIONAL,    -- Cond Setup
                dummy2                           ENUMERATED {n1, n2},
                ...
            }
OPTIONAL      -- Need R
        },
        ue-Specific                      SEQUENCE {
        (UE-specific search space)
            dci-Formats                      ENUMERATED {formats0-0-
And-1-0, formats0-1-And-1-1},
            ...,


        }
    }
OPTIONAL     -- Cond Setup2
}
```

A base station may configure one or multiple search space sets for a UE according to configuration information. According to some embodiments, a base station may configure search space set 1 and search space set 2 for a UE. Search space set 1 may be configured to allow the UE to monitor DCI format A scrambled by an X-RNTI in a common search space, and search space set 2 may be configured to allow the UE to monitor DCI format B scrambled by a Y-RNTI in a UE-specific search space.

According to configuration information, one or multiple search space sets may exist in a common search space or a UE-specific search space. For example, search space set #1 and search space set #2 may be configured to be a common search space, and search space set #3 and search space set #4 may be configured to be a UE-specific search space.

In a common search space, a UE may monitor the following combinations of a DCI format and an RNTI. However, the disclosure is not limited to the example below.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

In a UE-specific search space, a UE may monitor the following combinations of a DCI format and an RNTI. However, the disclosure is not limited to the example below.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The RNTIs may follow the definitions and usages below.

Cell RNTI (C-RNTI): For scheduling a UE-specific PDSCH or PUSCH
Temporary cell RNTI (TC-RNTI): For scheduling a UE-specific PDSCH
Configured scheduling RNTI (CS-RNTI): For scheduling a semi-statically configured UE-specific PDSCH

Random access RNTI (RA-RNTI): For scheduling a PDSCH in a random access stage
Paging RNTI (P-RNTI): For scheduling a PDSCH on which paging is transmitted
System information RNTI (SI-RNTI): For scheduling a PDSCH on which system information is transmitted
Interruption RNTI (INT-RNTI): For notifying of whether puncturing for a PDSCH is performed
Transmit power control for PUSCH RNTI (TPC-PUSCH-RNTI): For indicating a power control command for a PUSCH
Transmit power control for PUCCH RNTI (TPC-PUCCH-RNTI): For indicating a power control command for a PUCCH
Transmit power control for SRS RNTI (TPC-SRS-RNTI): For indicating a power control command for an SRS

The DCI formats mentioned above may follow a definition as in <Table 7> below.

[Table 7

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

A search space of aggregation level L at search space set s and CORESET p may be expressed as in an equation below.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{p,s,\max}^{(L)}} \right\rfloor + n_{CI} \right) \bmod \left\lfloor N_{CCE,p} / L \right\rfloor \right\} + i$$

- L: Aggregation level
- $n_{CI}$: Carrier index
- $N_{CCE,p}$: A total number of CCEs existing in control resource set p
- $n_{s,f}^{\mu}$: Slot index
- $M_{p,s,\max}^{(L)}$: The number of PDCCH candidates at aggregation level L
- $m_{snCI} = 0, ..., M_{p,s,\max}^{(L)} -1$: The index of PDCCH candidates at aggregation level L
- i = 0, ..., L-1

- $Y_{p,n_{s,f}^{\mu}} = \left( A_p \cdot Y_{p,n_{s,f}^{\mu}-1} \right) \bmod D$ , $Y_{p,-1} = n_{RNTI} \neq 0$, $A_0 = 39827$, $A_1 = 39829$, $A_2 = 39839$, $D = 65537$
- $n_{RNTI}$ : UE identifier

A value of $Y_{p,n_{s,f}^{\mu}}$ may correspond to 0 in a case of a common search space.

A value of $Y_{p,n_{s,f}^{\mu}}$ may change according to a time index and an ID of a UE (C-RNTI or ID configured for the UE by a base station) in a case of a UE-specific search space.

As a method for supporting an ultra-high-speed data service, a data rate may be increased through a spatial multiplexing method using multiple transmission and reception antennas. In general, the number of required power amplifiers (PAs) are increased in proportion to the number of transmission antennas included in a base station or a UE. The maximum output of a base station and a UE depends on a power amplifier characteristic, and in general, the maximum output of a base station changes according to the size of a cell covered by the base station. Maximum output is usually expressed in unit of dBm. The maximum output of a UE is normally 23 dBm or 26 dBm.

In an example of a common 5G base station, the base station may include 64 transmission antennas and 64 power amplifiers corresponding thereto in a 3.5 GHz frequency band and operate in 100 MHz bandwidth. Consequently, the energy consumption of the base station becomes greater in proportion to the output of the power amplifiers and the operation time of the power amplifiers. In comparison with an LTE base station, a 5G base station has a relatively high operating frequency band and thus requires a wide bandwidth and includes many transmission antennas. This characteristic leads to an increase in a data rate, but also results in higher energy consumption of the base station. Therefore, the greater the number of base stations configuring a mobile communication network, the larger the energy consumption of the entire mobile communication network.

As described above, the energy consumption of a base station largely depends on a power amplifier operation. A power amplifier involves a base station transmission operation, and thus a downlink (DL) transmission operation of a base station is highly related to the energy consumption of the base station. An uplink (UL) reception operation of a base station relatively does not account for a large proportion of the energy consumption of the base station. A physical channel and a physical signal transmitted by a base station through downlink are as follows.

- Physical downlink shared channel (PDSCH): A downlink data channel including data to be transmitted to one or multiple UEs
- Physical downlink control channel (PDCCH): A downlink control channel including scheduling information for a PDSCH and a physical uplink control channel (PUSCH). Alternatively, a PDCCH may solely transmit control information, such as a slot format or a power control command, without a PDSCH or PUSCH to be scheduled. The scheduling information includes information on a resource to which the PDSCH or PUSCH is mapped, HARQ-related information, or power control information, etc.
- Physical broadcast channel (PBCH): A downlink broadcast channel providing a master information block (MIB) that is necessary system information required for a UE to transmit and receive a data channel and a control channel
- Primary synchronization signal (PSS): This is a signal serving as a criterion of DL time/frequency synchronization and provides partial information of a cell ID
- Secondary synchronization signal (SSS): A signal serving as a criterion of DL time and/or frequency (hereinafter, time/frequency) synchronization and providing remaining partial information of a cell ID
- Demodulation reference signal (DM-RS): A reference signal for channel estimation of a UE for each of a PDSCH, a PDCCH, and a PBCH
- Channel-state information reference signal (CSI-RS): A downlink signal serving as a criterion of measurement of a downlink channel state by a UE
- Phase-tracking reference signal (PT-RS): A downlink signal for phase tracking

In view of the energy saving of a base station, if the base station stops a downlink transmission operation, a power amplifier operation is stopped accordingly, so that the effect of energy saving of the base station may be increased. As well as power amplifiers, an operation of the remaining base station devices, such as baseband devices, is also reduced, whereby additional energy saving is possible. Similarly, if even an uplink reception operation which accounts for a relatively small portion of the entire energy consumption of a base station is able to be stopped, the effect of additional energy saving may be obtained.

A downlink transmission operation of a base station basically depends on the amount of downlink traffic. For example, if there is no data to transmit to a UE through downlink, a base station is not required to transmit a PDSCH and a PDCCH for scheduling the PDSCH. In addition, if transmission is deferrable for a moment for the reason that data is not sensitive to transmission delays, a base station may not perform PDSCH and/or PDCCH transmission. Hereinafter, for convenience of explanation, a method of reducing the energy consumption of a base station by not performing or properly adjusting PDSCH and/or PDCCH transmission associated with data traffic is called "Base station energy saving method 1-1".

On the other hand, a physical channel and a physical signal, such as a PSS, an SSS, a PBCH, and a CSI-RS, are repeatedly transmitted according to a predetermined promised period regardless of data transmission to a UE. Therefore, a UE may continuously update downlink time/frequency synchronization, a downlink channel state, a radio link quality, etc. even if the UE does not receive data. That is, a PSS, an SSS, a PBCH, and a CSI-RS are required to be necessarily transmitted through downlink independently to downlink data traffic, and cause the energy consumption of a base station accordingly. Therefore, transmission of a signal irrelevant to (or having low relevance with) data traffic is adjusted to be performed less frequently, whereby the energy saving of a base station may be accomplished (hereinafter, this is called "Base station energy saving method 1-2").

During a time interval in which a base station does not perform downlink transmission through "Base station energy saving method 1-1" or "Base station energy saving method 1-2", an operation of a power amplifier of the base station and an operation of a relevant RF device and a baseband device may be stopped or minimized, thereby maximizing the effect of energy saving of the base station.

As another method, some of antennas or power amplifiers of a base station may be switched off, thereby saving the energy consumption of the base station (hereinafter, "Base station energy saving method 2"). In this case, as an adverse reaction of energy saving of a base station, opposite effects, such as decrease in cell coverage or throughput decreases, may be accompanied. For example, as described above, there may be a base station including 64 transmission antennas and 64 power amplifiers corresponding thereto in a 3.5 GHz frequency band and operating in 100 MHz bandwidth. For energy saving of the base station, if only four transmission antennas and four power amplifiers are activated and the remaining transmission antennas and power amplifiers are switched off for a predetermined time interval, the energy consumption of the base station during the time interval is reduced to about 1/16 (=4/64). If only four transmission antennas and four power amplifiers are activated and the remaining transmission antennas and power amplifiers are switched off for a predetermined time interval, accomplishment of cell coverage and throughput when 64 antennas and 64 power amplifiers are assumed become difficult due to the reduction of maximum transmission power and the decrease in a beamforming gain.

In the following description, in order to distinguish from a general base station operation, a base station mode of applying an operation for energy saving of a base station is called a base station energy saving mode (ES mode), and a base station mode of applying a general base station operation is called a base station normal mode.

As another method for supporting an ultra-high-speed data service, transmission and reception of a signal in an ultra-wide bandwidth of several tens to several hundreds of MHz or several GHz may be supported in a 5G system. Transmission and reception of a signal in an ultra-wide bandwidth may be supported through a single component carrier (CC) or supported through a carrier aggregation (CA) technology of combining several component carriers. In the carrier aggregation technology, when a mobile communication service provider fails to secure a frequency in a bandwidth sufficient to provide an ultra-high-speed data service by using a single component carrier, component carriers having a relatively small bandwidth are combined to increase the total sum of frequency bandwidths and consequently enable the ultra-high-speed data service.

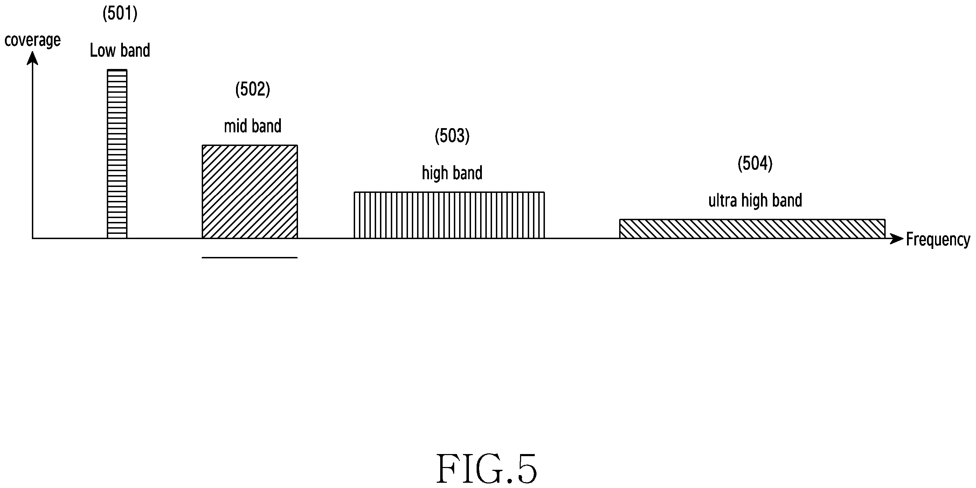

FIG. 5 is a diagram illustrating a correlation between a frequency band, a coverage, and a bandwidth according to an embodiment of the disclosure. As described above, a frequency band utilized in a 5G system has a wide range from several hundreds of MHz to several tens of GHz. In general, the lower the frequency band, the relatively smaller the pathloss, and thus the larger the coverage. The higher the frequency band, the relatively greater the pathloss, and thus the smaller the coverage. In a low frequency band, frequencies available for mobile communication are relatively small in number and has small bandwidths. On the contrary, in a high frequency band, it is relatively easy to secure wide-bandwidth frequencies and thus the high frequency band is suitable for an ultra-high-speed data service. As mobile communication systems evolve, efforts are being made to discover and utilize new frequency bands. For example, although it is still in the early discussion stages, a 6th generation (6G) mobile communication system that is a next generation mobile communication system is considering a THz (Terahertz, $10^{12}$ Hz) band as one of candidate frequencies. In general, a mobile communication service provider secures multiple frequency bands to provide a mobile communication service to users. For instance, a mobile communication service provider may combine previously secured frequency bands for LTE systems with newly secured frequency bands for 5G systems to operate a combined LTE and 5G system. Another example is that a mobile communication service provider may secure 5G system several frequency bands and then combine frequencies of the several bands to provide a mobile communication service through 5G CA. As mentioned above, the characteristic of coverage and bandwidth vary depending on a frequency band, and thus a mobile communication service using combined multiple frequency bands is becoming increasingly prevalent compared to that relying on a single frequency band.

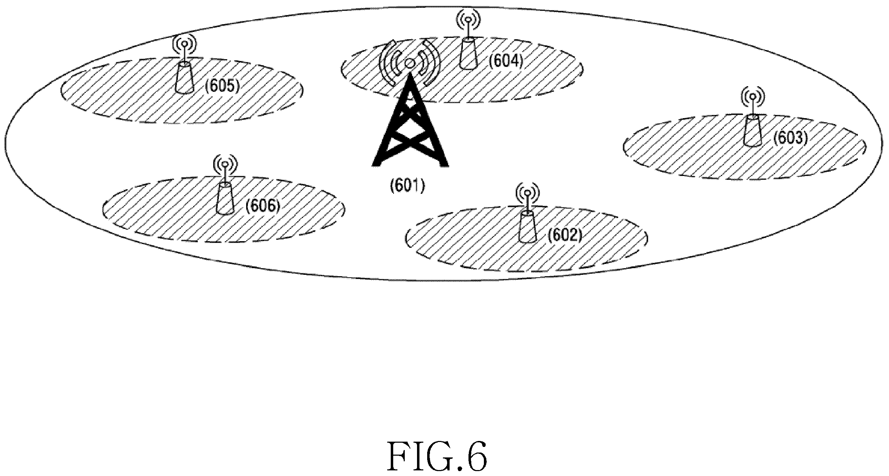

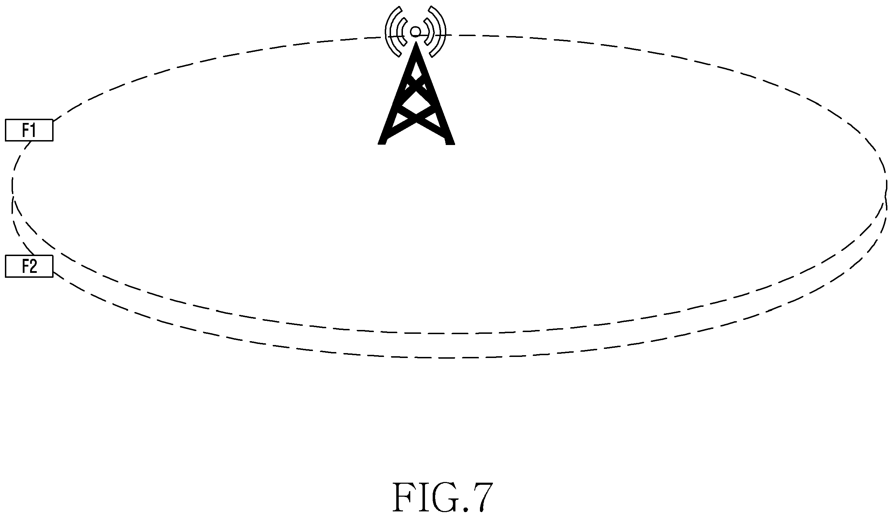

FIG. 6 and FIG. 7 illustrate representative scenarios of base station placement to which an operation of the disclosure is applied according to an embodiment of the disclosure.

FIG. 6 is a diagram illustrating a base station placement scenario according to an embodiment of the disclosure.

Referring to FIG. 6, a carrier is classified as a carrier (for convenience of explanation, this is referred to as a "macro cell" 601) operating at frequency F1 and a carrier (hereinafter, this is referred to a "small cell" 602, 603, 604, 605, or 606) operating at frequency F1 or F2 (F1 < F2). It is assumed that while a "macro cell" has a relatively high maximum output to provide wide cell coverage, a "small cell" provides limited cell coverage at a relatively low maximum output. The size of a circle illustrated in FIG. 6 indicates the size of coverage providable by each carrier. In FIG. 6, multiple "small cells" coexist in the coverage of a "macro cell". The "macro cell" and the "small cells" are connected by wire or wirelessly to be able to smoothly cooperate with each other. In the disclosure, a "macro cell" and a "small cell" may be combined into a base station, or a "macro cell" and a "small cell" may be independently implemented to be separate base stations. If a "macro cell" and a "small cell" are implemented to be one base station, each of the "macro cell" and the "small cell" may be called a transmission reception point (TRP).

FIG. 7 is a diagram illustrating a base station placement scenario according to an embodiment of the disclosure.

Referring to FIG. 7, a carrier aggregation system in which a carrier (cell 1) operating at frequency F1 and a carrier (cell 2) operating at frequency F2 are combined is illustrated (F1 ≠ F2). In FIG. 7, an example in which carrier aggregation is applied through one base station is illustrated. Unlike the case of FIG. 6, a case where the cell coverages provided by respective carriers are similar to each other is provided.

The main substance of the disclosure is to adjust the transmission power of a signal transmitted by a base station so as to reduce the energy consumption of the base station. That is, when the transmission power of a base station in a base station normal mode is $P_{normal}$, if the transmission power of a base station in a base station energy saving mode is $P_{energysaving}$, the transmission power of a base station transmission signal is adjusted to satisfy a relation of $P_{normal} > P_{energysaving}$. "Base station energy saving method 2" described above may correspond to a special case of $P_{energysaving} = 0$. A unit of $P_{normal}$ and $P_{energysaving}$ may be Watt.

In the scenario of FIG. 6 or FIG. 7, a base station may adjust the transmission power of a base station transmission signal in at least one cell among multiple cells configuring a system, thereby reducing the energy consumption of the base station. For example, in the case of FIG. 6, the base station adjusts the transmission power of the at least one "small cell" and maintains the transmission power of the "macro cell" without change, whereby the base station may maintain the cell coverage through the "macro cell" and reduce the base station energy consumption of the "small cell". Also in the case of FIG. 7, the base station may adjust the transmission power of cell 2 and maintain the transmission power of cell 1 without change, thereby enabling the maintenance of the cell coverage and the reduction of the base station energy consumption.

Transmission power may be expressed by a power spectral density (PSD) in association with bandwidth. A unit of a PSD is normally represented by Watt/Hz, which means the power per unit bandwidth. Transmission bandwidth means a bandwidth occupied by a signal transmitted by a base station and may be represented in a unit of MHz. As a concept similar to the PSD, an energy per resource element (EPRE) may be used. The EPRE means energy per RE. The EPRE may be expressed in a unit of dBm.

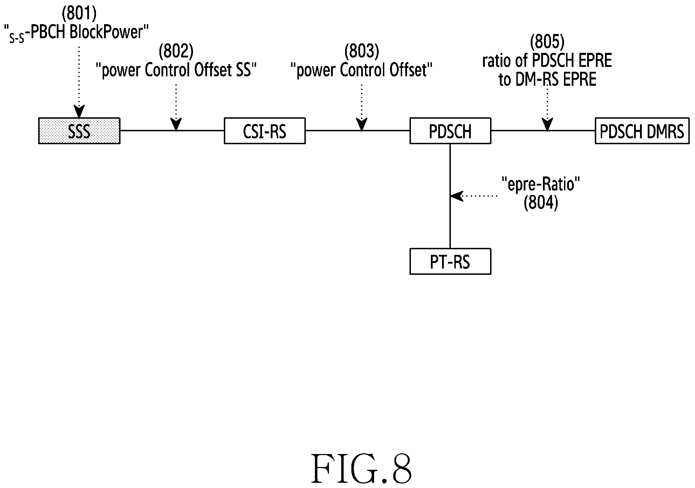

FIG. 8 is a diagram illustrating a correlation between downlink signal transmission power configurations according to an embodiment of the disclosure. The correlation between downlink signal transmission power configurations illustrated in FIG. 8 may correspond to a correlation between EPRE configurations of downlink signals in a 5G system. Basically, a base station may configure the EPRE of an SSS, then adjust CSI-RS EPRE, based on the SSS EPRE, and adjust PDSCH EPRE, based on the CSI-RS EPRE, PT-RS EPRE, based on the PDSCH EPRE, and PDSCH DMRS EPRE, based on the PDSCH EPRE. That is, the EPREs of downlink signals are associated with each other. A base station may notify a UE of the EPRE of a downlink signal through the following method.

- "*ss-PBCH-BlockPower*" 801: This is a parameter that adjusts the EPRE of an SSS and is notified of by the base station to the UE through signaling. The parameter is expressed in a unit of dBm. The same value as SSS EPRE is normally applied as PSS EPRE, and PBCH EPRE, PBCH DMRS EPRE.
- "*powerControlOffsetSS*" 802: This is a parameter that adjusts the power offset of a CSI-RS RE and an SSS RE and is notified of by the base station to the UE through signaling. The parameter is the ratio of CSI-RS EPRE and SSS EPRE and is represented in dB.
- "*powerControlOffset*" 803: This is a parameter that adjusts the power offset of a PDSCH RE and a CSI-RS RE and is notified of by the base station to the UE through signaling. The parameter is the ratio of PDSCH EPRE and CSI-RS EPRE and is represented in dB.
- "*epre-Ratio*" 804: This is a parameter that adjusts the ratio of PT-RS EPRE and PDSCH EPRE and is notified of by the base station to the UE through signaling. The parameter is represented in dB.
- Ratio of PDSCH EPRE to PDSCH DM-RS EPRE 805: This determines the ratio of PDSCH EPRE and PDSCH DM-RS EPRE according to a PDSCH DM-RS configuration separately configured by the base station.

Hereinafter, an operation of adjusting the transmission power of a signal transmitted by a base station, proposed in the disclosure, is described through a specific embodiment.

<First embodiment>

The first embodiment describes a method of adjusting the transmission power of a downlink signal by a base station.

In general, once the transmission power of a downlink common signal (PSS, SSS, PBCH, CSI-RS etc.) transmitted by a base station is determined at a base station installation stage by considering cell coverage, the transmission power remains without change unless there are special circumstances. However, if energy saving relating to a base station is required, the base station needs a method of rapidly changing the transmission power of a downlink common signal to increase the effect of energy saving.

A base station may adjust the transmission power of a downlink common signal and notify a UE of the adjusted transmission power through the following signaling methods.

- Method 1 (RRC signaling): The base station may notify the UE of *"ss-PBCH BlockPower"* or *"powerControlOffsetSS"* described above, or a value corresponding thereto through RRC signaling as in a conventional method. The signaling error probability may be remarkably lowered through HARQ and ARQ procedures, but a relatively long time is required until signaling completion and UE application.

- Method 2 (RRC signaling): The base station may notify the UE of "ss-*PBCH BlockPower"* or "*powerControlOffsetSS*" described above, or a value corresponding thereto through MAC signaling. The signaling error probability of MAC signaling may have a value intermediate between the error probabilities of RRC signaling and physical layer signaling. The completion time of MAC signaling may also have a value intermediate between an RRC signaling time and a physical layer signaling time.

- Method 3 (physical layer signaling): The base station may notify the UE of *"ss-PBCH BlockPower"* or "*power-ControlOffsetSS*" described above, or a value corresponding thereto through physical layer signaling. Physical layer signaling has a relatively high signaling error probability while having a fast signaling completion time. Physical layer signaling may be transmitted through a PDCCH. For example, the base station may perform signaling through a group-common PDCCH commonly applied to several UEs or a PDCCH scheduling a PDSCH/PUSCH of a predetermined UE. If a group-common PDCCH is used, the base station may define and operate a separate CORESET, search space, DCI format, and RNTI for transmission power adjustment of a downlink signal. For example, the base station may introduce and operate $CORESET_{ES}$ as a CORESET of a PDCCH for energy saving of the base station, $SearchSpace_{ES}$ as a search space of the PDCCH for energy saving of the base station, DCI 2_ES that is a DCI format of the PDCCH for energy saving of the base station, and an ES-RNTI that is an RNTI for energy saving of the base station. In order to obtain signaling indicating energy saving of the base station, the UE may monitor $CORESET_{ES}$ and the search space $SearchSpace_{ES}$ to detect the signaling according to the DCI format DCI 2_ES and disassemble same with an ES-RNTI so as to obtain signaling for energy saving of the base station.

- Method 4 (combination of RRC signaling and MAC signaling): RRC signaling of method 1 and MAC signaling of method 2 may be combined. The base station may first notify, through RRC signaling, the UE of all or some of signaling values for transmission power adjustment of a downlink signal, and then additionally notify, through MAC signaling, of a transmission power value of the downlink signal to be finally applied by the UE among the signaling values notified of through RRC signaling. Through such stepwise signaling, the base station may divide the amount of information required to be signaled at one time and trade off the advantages and disadvantages of the signaling methods.

- Method 5 (combination of RRC signaling and physical layer signaling): RRC signaling of method 1 and physical layer signaling of method 3 may be combined. Similarly to method 4, the base station may first notify, through RRC signaling, the UE of all or some of signaling values for transmission power adjustment of a downlink signal, and then additionally notify, through physical layer signaling, of a transmission power value of the downlink signal to be finally applied by the UE among the signaling values notified of through RRC signaling. Through such stepwise signaling, the base station may divide the amount of information required to be signaled at one time and trade off the advantages and disadvantages of the signaling methods.

A signaling value may individually represent an SSS EPRE value adjusted by the base station or a value corresponding thereto, or an EPRE value of each downlink common signal, such as SSS EPRE, CSI-RS EPRE, or PT-RS EPRE or a value corresponding thereto. In addition, a signaling value may indicate an absolute value of a newly changed EPRE value or indicate a ratio or a percentage for EPRE in a base station normal mode.

<Second embodiment>

The second embodiment describes a method of adjusting the transmission power of a CSI-RS.

In a 5G system, a CSI-RS has various uses as follows.

- CSI-RS use 1: A reference signal for measuring a downlink channel state by a UE (CSI measurement)
- CSI-RS use 2: A reference signal for downlink time/frequency tracking by a UE
- CSI-RS use 3: A reference signal for supporting mobility of a UE
- CSI-RS use 4: In a case of CA, a reference signal for supporting rapid SCell activation
- CSI-RS use 5: A reference signal for downlink interference measurement by a UE

A base station may configure a CSI-RS resource for a UE according to each CSI-RS use so as to use various CSI-RSs as described above. A CSI-RS resource includes information on a time/frequency resource to which a CSI-RS is mapped, and information on the transmission power of the CSI-RS, such as "*powerControlOffsetSS*" described above.

In the second embodiment, when a base station adjusts the transmission power of a downlink signal to accomplish energy saving of the base station, the base station adjusts the transmission power of each CSI-RS for a corresponding CSI-RS resource according to the characteristic of the use of the CSI-RS.

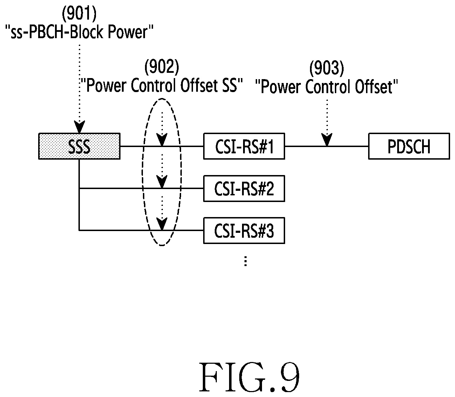

FIG. 9 is a diagram illustrating adjustment of transmission power for each CSI-RS resource according to an embodiment of the disclosure. The adjustment of transmission power for each CSI-RS resource illustrated in FIG. 9 may correspond to the adjustment of transmission power for each CSI-RS resource according to the second embodiment. Referring to FIG. 9, *"ss-PBCH-BlockPower"* 901 adjusts SSS EPRE. *"powerControlOffsetSS"* 902 represents how much the transmission power needs to be adjusted for each CSI-RS resource compared to SSS EPRE. *"powerControlOffset"* 903 adjusts PDSCH EPRE compared to CSI-RS EPRE. A UE may be additionally notified, through signaling, of information relating to which CSI-RS resource among several CSI-RS resources, the PDSCH EPRE of which needs to be adjusted compared to the CSI-RS EPRE. In the example of FIG. 9, PDSCH transmission power is adjusted based on CSI-RS #1. A base station notifies the UE of *"ss-PBCH-BlockPower"* 901, *"powerControlOffsetSS"* 902, and *"power-ControlOffset"* 903 through signaling.

<Third Embodiment>

In the third embodiment, a measurement report method of a UE when a base station adjusts the transmission power of a downlink signal is described.

UE measurement is a measurement operation performed by a UE for a channel state between the UE and a base station, and various measurement values may be defined. A base station may notify a UE of configuration information related to a measurement report through signaling in advance, thereby controlling a measurement report method specifically including a reference signal required to be measured by the UE, a measurement value, a reporting period, and a reporting condition. The base station may determine whether to hand over the UE to another cell, and perform an efficient scheduling operation for the UE by referring to the measurement report received from the UE. A measurement report of a UE may be classified as an L3 measurement report and an L1 measurement report.

- L3 measurement report: An L3 measurement report is a measurement report transmitted by a UE to a base station in a higher layer 3 (layer 3, L3) signaling type, and the UE performs measurement during a relatively long observation time. Therefore, this report is suitable for measurement of a channel state that does not relatively rapidly change over time. The L3 measurement report is transmitted through a PUSCH that is a physical channel for uplink data transmission and may contain a relatively large amount of information. The following pieces of information are included in the L3 measurement report.

  ■ Reference signal received power (RSRP): This is a value representing reception power for a reference signal, and is used to determine whether the radio link quality of a cell in which a reference signal is transmitted is maintained at a predetermined level or higher. The reference signal may be an SSB or CSI-RS.
  ■ Reference signal received quality (RSRQ): This is a value representing reception quality for a reference signal, and is used to determine whether the radio link quality of a cell in which a reference signal is transmitted is maintained at a predetermined level or higher, similarly to the RSRP. The reference signal may be an SSB or CSI-RS.
  ■ Signal-to-noise and interference ratio (SINR): This is a value representing a ratio of a reception signal to noise and interference for a reference signal, and the reference signal may be an SSB or CSI-RS.

- L1 measurement report: An L1 measurement report is a measurement report transmitted by a UE to a base station in a physical layer 1 (layer 1, L1) signaling type, and the UE performs measurement during a relatively short observation time. Therefore, this is suitable for reporting a relatively instantaneous channel state. A reference signal to be measured by a UE may be an SSB or CSI-RS. The L1 measurement report is transmitted through a PUCCH or PUSCH and may contain a relatively small amount of information. The following pieces of information are included in the L1 measurement report.

  ■ Channel quality indicator (CQI): CQI index indication information configured by a modulation scheme and a coding rate satisfying a previously defined minimum reception error rate of a PDSCH
  ■ Precoding matrix indicator (PMI): Information indicating a precoding matrix selected by a UE
  ■ CSI-RS resource indicator (CRI): Information of a CSI-RS measured by a UE
  ■ Rank Indicator (RI): Information indicating a rank selected by a UE
  ■ Layer indicator: Information indicating the most superior layer in the precoding matrix reported by a UE
  ■ SS/PBCH block resource indicator (SSBRI): Information of an SSB measured by a UE
  ■ L1-reference signal received power (L1-RSRP): Information of L1 RSRP measured by a UE

A UE may perform measurement reporting for a neighboring cell as well as measurement reporting for a cell being currently accessed. The UE performs a measurement operation for a reference signal of a neighboring cell in order to perform measurement reporting of the neighboring cell. The UE may periodically report a measurement report according to a base station configuration (periodic reporting), or may report same when a previously configured condition is satisfied (event-triggered reporting).

As described above, a UE performs a measurement operation for a predetermined reference signal for a predetermined observation time interval for a L1 measurement report or L3 measurement report.

However, when a base station changes the transmission power of a reference signal according to whether a mode is a base station normal mode or a base station energy saving mode, it is required that a measurement reporting value and a measurement reporting condition of a UE are changed according to the changed transmission power of the reference signal. For example, if the transmission power of a reference signal transmitted by a base station is $P_{normal}$ in a base station normal mode, a UE determines whether to report, to the base station, the RSRP measurement value $RSRP_{normal}$ of the reference signal measured by the UE by comparing the $RSRP_{normal}$ with $THRESHOLD_{normal}$ that is a pre-promised determination condition.

If the transmission power of the reference signal transmitted by the base station is changed to $P_{ES}$ ($P_{ES} < P_{normal}$) in a base station energy saving mode, the RSRP measurement value $RSRP_{ES}$ of the reference signal measured by the UE has a value within a range different from that of $RSRP_{normal}$ by the transmission power change amount of the reference signal. In addition, if $TBRESHOLD_{normal}$ is applied without change as a threshold value that is a condition of determining whether to report the RSRP measured by the UE to the base station, an inaccurate measurement reporting operation of the UE may occur. Therefore, in the base station energy saving mode, the UE reports, to the base station and as the RSRP measurement value $RSRP_{ES}$, a value changed by the transmission power change amount of the reference signal. Similarly, $THRESHOLD_{ES}$ is applied as a threshold value to be used in the base station energy saving mode.

Among several types of measurement reporting, the above description based on RSRP is provided, but is normalized and then applicable similarly to another type of measurement reporting. Similarly, a determination condition of determining, by a UE, whether to report a measurement report to a base station may also be individually defined for each measurement reporting value or each event of measurement reporting.

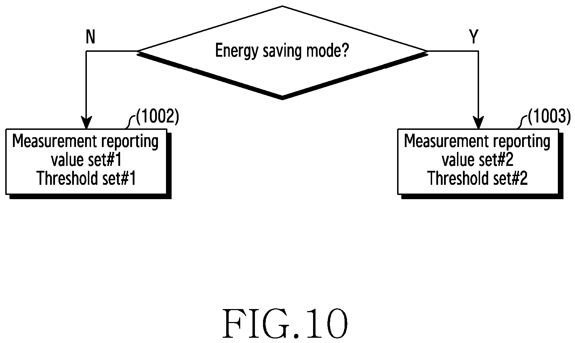

FIG. 10 is a diagram illustrating a measurement reporting procedure of a UE according to an embodiment of the disclosure. The measurement reporting procedure of a UE illustrated in FIG. 10 may correspond to the measurement reporting procedure of the UE according to the third embodiment.

Referring to FIG. 10, in operation 1001, a UE determines whether a base station is in an energy saving mode. The base station may directly notify, through signaling, the UE that the base station is in the energy saving mode. Alternatively, the base station may inform of an adjusted downlink transmission power value to indirectly notify the UE that the base station is in the energy saving mode.

When a result of the determination in operation 1001 indicates that the base station operates in a base station normal mode, in operation 1002, the UE maintains a measurement reporting value (measurement reporting value set #1) and a threshold value (threshold set #1) as in an existing method. When a result of the determination in operation 1001 indicates that the base station operates in the base station energy saving mode, in operation 1003, the UE applies a measurement reporting value (measurement reporting value set #2) and a threshold value (threshold set #2) in the base station energy saving mode.

<Fourth Embodiment>

The fourth embodiment describes another method of adjusting the transmission power of a downlink signal.

With reference to FIG. 8, it has been described that SSS EPRE is adjusted thereby adjusting the transmission power of a downlink signal associated with the SSS in a serial manner. Unlike the description, the fourth embodiment describes a method of adjusting the transmission power of a downlink signal by a base station independently to an SSS. In particular, the fourth embodiment describes a method of adjusting, by a base station, the transmission power of a PDCCH and a PDSCH, which are UE-specific signals, without changing the transmission power of a downlink common signal. As described above, a downlink common signal including an SSS is a main signal of determining cell coverage and it may not be preferrable that a base station changes the transmission power in some cases. For example, if one cell configures a system differently from the scenario of FIG. 6 or 7, there may be no separately arranged method of restoring cell coverage attenuation caused by the change of the transmission power of a downlink common signal by a base station.

Unlike downlink common signals, in a case of a PDCCH and PDSCH transmitted to each UE, even if a base station changes the transmission power, an effect on coverage decrease may be offset through change of a transmission bandwidth or a transmission antenna through scheduling. However, in a case of downlink common signals, most of the transmission formats, such as a transmission bandwidth or a transmission antenna, are fixed and thus it is hard to change same.

Therefore, in the fourth embodiment, a base station adjusts the transmission power of each of a UE-specific PDCCH, a PDSCH, a PDCCH DMRS, and a PDSCH DMRS and notifies a UE of the adjusted transmission power through signaling. The UE processes the UE-specific PDCCH, the PDSCH, the PDCCH DMRS, and the PDSCH DMRS by reflecting the changed transmission power thereon when receiving same. The processing of the UE includes channel estimation, PDCCH decoding, PDSCH decoding, etc. Even in a case of a PDCCH and a PDSCH, if same are transmitted cell-specifically, a base station maintains existing transmission power without change, and a UE also performs processing according to the existing transmission power. Whether a PDCCH and a PDSCH are UE-specific signals or cell-common signals may be determined through an RNTI scrambling the channel. For example, while a PDCCH and a PDSCH scrambled by a C-RNTI are UE-specific signals, a PDCCH and a PDSCH scrambled by an SI-RNTI are cell-common signals carrying system information. A specific method of the first embodiment described above may be applied as a signaling method of adjusting the transmission power of a UE-specific PDCCH and PDSCH, and a PDCCH DMRS and a PDSCH DMRS. A UE-specific PDCCH and PDSCH is able to be transmitted to only a UE being in a connected state, for which a base station has completed an initial access procedure. Therefore, a PDCCH/PDSCH transmission power change method is not applied to UEs having not completed an initial access procedure yet or not being in a connected state.

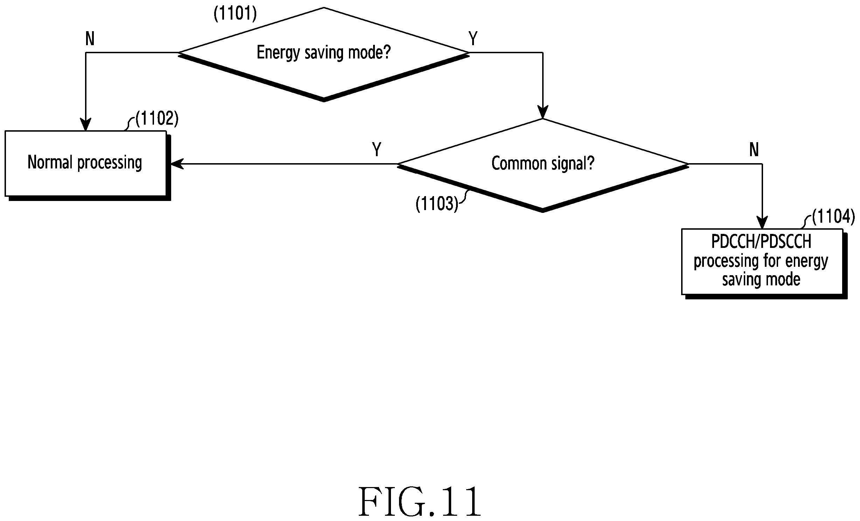

FIG. 11 is a diagram illustrating a UE procedure according to a change of downlink signal transmission power according to an embodiment of the disclosure. The UE procedure according to a change of downlink signal transmission power illustrated in FIG. 11 may correspond to the procedure of the UE according to the fourth embodiment.

Referring to FIG. 11, in operation 1101, a UE determines whether a base station is in an energy saving mode. The base station may directly or indirectly notify, through signaling, the UE that the base station is in the energy saving mode.

When a result of the determination of operation 1101 indicates that the base station operates in a base station normal mode, in operation 1102, the UE performs reception processing for a downlink signal, based on the transmission power of the base station normal mode. When a result of the determination of operation 1101 indicates that the base station operates in the base station energy saving mode, in operation 1103, the UE determines whether a signal to be received from the base station is a cell-common signal. If the signal is the cell-common signal, a procedure of operation 1102 proceeds for the cell-common signal. If a result of the determination of operation 1103 indicates a UE-specific signal, in operation 1104, the UE performs reception processing of a PDCCH and a PDSCH reflecting the adjusted transmission power.

<Fifth Embodiment>

The fifth embodiment describes an example of a UE procedure and a base station procedure according to a preferred embodiment of the disclosure. The UE procedure and the base station procedure of the fifth embodiment may be performed by being combined with at least one embodiment among the first embodiment to the fourth embodiment.

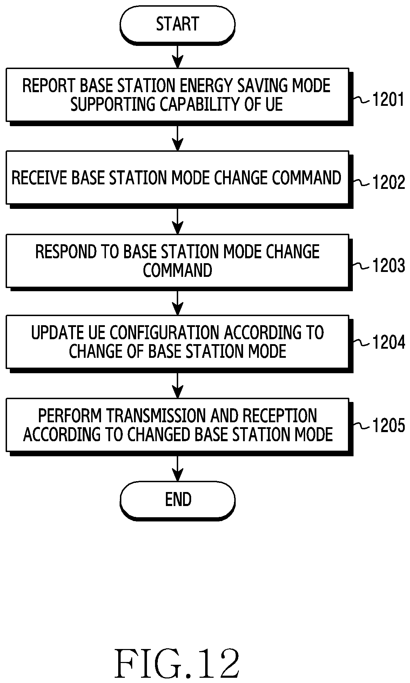

FIG. 12 is a diagram for describing a UE procedure according to an embodiment of the disclosure. Specifically, FIG. 12 is a flowchart relating to a UE procedure in which, when a base station switches to a base station energy saving mode or a base station normal mode, a UE applies the switched mode.

Referring to FIG. 12, in operation 1201, a UE reports, to a base station, UE capability information including a base station energy saving mode supporting capability. The UE capability information may include at least one piece of information among pieces of capability information related to a base station energy saving mode, such as information indicating whether the UE supports the base station energy saving mode, control information related to a frequency band supported by the UE, or control information related to a channel bandwidth supported by the UE.

Thereafter, in operation 1202, when signaling that changes the mode of the base station to the base station energy saving mode is successfully obtained from the base station, the UE changes a UE configuration according to the indicated base station energy saving mode. An example of the signaling may include at least one of pieces of configuration information related to the base station energy saving mode, such as information on base station transmission power, configuration information on a physical channel and a physical signal, the transmission characteristic of which is changed, and UE measurement configuration information for measurement reporting, which are changed according to the base station energy saving mode.

Alternatively, the UE may receive, from the base station, signaling that changes from the base station energy saving mode to a base station normal mode in operation 1202. In this case, the signaling may include at least one of pieces of configuration information related to the base station normal mode, such as information on base station transmission power, configuration information on a physical channel and a physical signal, the transmission characteristic of which is changed, and UE measurement configuration information for measurement reporting, which are changed according to the base station normal mode. In addition, it is also possible that information which may be included in base station mode change signaling is configured for the UE through higher signaling in advance.

In operation 1203, when "base station mode change signaling" is successfully obtained, the UE transmits "base station mode change signaling response" control information to the base station. Omission of the transmission of the control information is possible.

In operation 1204, the UE completes to update a relevant UE configuration according to a "base station mode change command". According to an embodiment, the UE having received the signaling may change a hardware configuration or software configuration of an RF device, a baseband device, etc. operating according to the changed base station transmission power. Starting from operation 1205, the UE performs a transmission and reception operation according to the changed base station mode. A UE transmission and reception operation according to a specific base station mode follows the above embodiments.

The operations mentioned with reference to FIG. 12 may be omitted or changed in the order, or it is possible that the disclosure is performed together with an added operation not mentioned herein.

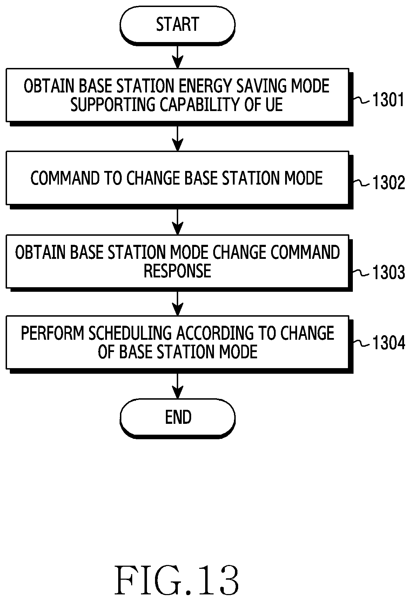

FIG. 13 is a flowchart for describing a base station procedure according to an embodiment of the disclosure. Specifically, FIG. 13 is a flowchart relating to a base station procedure in which, when a base station switches to a base station energy saving mode or a base station normal mode, a base station applies the switched mode.

Referring to FIG. 13, in operation 1301, a base station obtains, from a UE, UE capability information including a base station energy saving mode supporting capability. The UE capability information may include at least one piece of information among pieces of capability information related to a base station energy saving mode, such as information indicating whether the UE supports the base station energy saving mode, control information related to a frequency band supported by the UE, or control information related to a channel bandwidth supported by the UE.

Thereafter, in operation 1302, the base station performing mode change transmits "base station mode change signaling" to the UE. According to an embodiment, when the signaling is signaling that changes from a base station normal mode to the base station energy saving mode, the signaling may include at least one of pieces of configuration information related to the base station energy saving mode, such as information on base station transmission power, configuration information on a physical channel and a physical signal, the transmission characteristic of which is changed, and UE measurement configuration information for measurement reporting, which are changed according to the base station energy saving mode.

Alternatively, the base station may transmit, to the UE, signaling that changes from the base station energy saving mode to the base station normal mode in operation 1302. In this case, the signaling may include at least one of pieces of configuration information related to the base station normal mode, such as information on base station transmission power, configuration information on a physical channel and a physical signal, the transmission characteristic of which is changed, and UE measurement configuration information for measurement reporting, which are changed according to the base station normal mode. In addition, it is also possible that information which may be included in the base station mode change signaling is configured for the UE through higher signaling in advance.

In operation 1303, the base station successfully obtains "base station mode change signaling response" control information from the UE. Omission of operation 1303 is also possible.

In operation 1304, the base station performs a scheduling operation according to the changed base station mode. According to an embodiment, the base station in the base station energy saving mode may transmit, to the UE, a downlink signal, the transmission power of which has been reduced according to the base station energy saving mode. A base station transmission and reception operation according to a specific base station mode follows the above embodiments.

The operations mentioned with reference to FIG. 13 may be omitted or changed in the order, or it is possible that the disclosure is performed together with an added operation not mentioned herein.

In addition, the methods described with reference to FIG. 12 and FIG. 13 may be performed by being combined with the first embodiment to the fourth embodiment.

In a cell controlled by a base station operating as described above, a UE (hereinafter, this is called UE A) supporting a UE operation according to a base station energy saving mode and a UE (hereinafter, this is called UE B) does not supporting same may coexist. UE A may perform a UE operation according to the above specific embodiments. UE B is unable to respond with a change of a base station transmission method according to a base station energy saving mode, and thus there are concerns about performance degradation in terms of transmission efficiency, cell capacity, throughput, UE power consumption, etc. Therefore, if the base station is able to distinguish whether a UE is UE A or UE B, by referring a UE capability report of the UE, the base station may take an additional operation for preventing performance degradation of UE B. For example, the base station may hand over UE B to a neighboring cell in which there is a base station in the base station normal mode, from the current cell which is to switch to the base station energy saving mode.

Various modifications of the fifth embodiment are possible. For example, a procedure of omitting an operation in which a UE reports UE capability to a base station is also possible.

As another modified example of the fifth embodiment, a method in which a base station performs operation without separately notifying a UE of "base station mode change signaling" is also possible. That is, a UE may perform a transmission and reception operation according to only base station scheduling without needing to distinguish whether the current base station is in a base station normal mode or a base station energy saving mode.

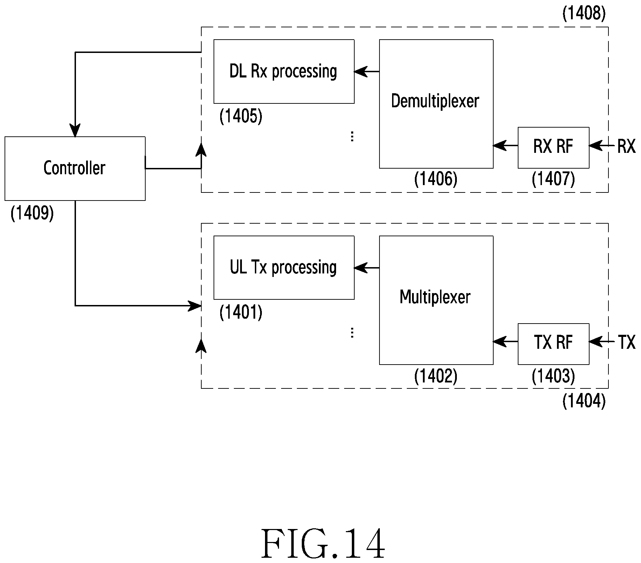

FIG. 14 is a diagram illustrating a UE transceiver in a wireless communication system according to an embodiment of the disclosure. For convenience of explanation, a device not directly related to the disclosure may not be illustrated and described.

Referring to FIG. 14, a UE may be configured by a transmitter 1404 including an uplink transmission processing block 1401, a multiplexer 1402, and a transmission RF block 1403, a receiver 1408 including a downlink reception processing block 1405, a demultiplexer 1406, and a reception RF block 1407, and a controller 1409. The controller 1409 may control each configuration block of the receiver 1408 for reception of a data channel or control channel transmitted by a base station as described above, and each configuration block of the transmitter 1404 for uplink signal transmission.

The uplink transmission processing block 1401 of the transmitter 1404 of the UE may generate a signal to be transmitted, by performing a process, such as channel coding, modulation, etc. A signal generated in the uplink transmission processing block 1401 may be multiplexed with another uplink signal by the multiplexer 1402, then be subject to signal processing in the transmission RF block 1403, and then be transmitted to the base station.

The receiver 1408 of the UE may demultiplex a signal received from the base station and distribute the demultiplexed signal to each downlink reception processing block. The downlink reception processing block 1405 may perform a process, such as demodulation, channel decoding, etc., for a downlink signal of the base station to obtain control information or data transmitted by the base station. The UE receiver 1408 may support an operation of the controller 1409 by applying an output result of the downlink reception processing block to the controller 1409.

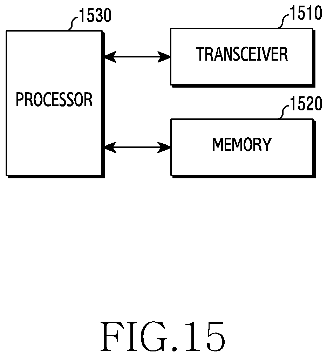

FIG. 15 is a block diagram illustrating a structure of a UE according to an embodiment of the disclosure.

Referring to FIG. 15, a UE of the disclosure may include a processor 1530, a transceiver 1510, and a memory 1520. However, components of the UE are not limited to the above-described example. For example, the UE may include a larger or smaller number of components than the above-described components. In addition, the processor 1530, the transceiver 1510, and the memory 1520 may be implemented in the form of a single chip. According to an embodiment, the transceiver 1510 of FIG. 15 may include the transmitter 1404 and the receiver 1408 of FIG. 14. Also, the processor 1530 of FIG. 15 may include the controller 1409 of FIG. 14.

According to an embodiment, the processor 1530 may control a series of processes such that the UE can operate according to the above-described embodiments of the disclosure. For example, according to an embodiment of the disclosure, the processor 1530 may control the components of the UE to perform transmission and reception methods of the UE according to whether the base station mode is a base station power saving mode or a base station normal mode. The processor 1530 may include one or multiple processors, and the processor 1530 may execute programs stored in the memory 1520 to perform transmission and reception operations of the UE in a wireless communication system employing the above-described carrier aggregation of the disclosure.

The transceiver 1510 may transmit/receive signals with the base station. The signals transmitted/received with the base station may include control information and data. The transceiver 1510 may include an RF transmitter configured to up-convert and amplify the frequency of transmitted signals, an RF receiver configured to low-noise-amplify received signals and down-convert the frequency thereof, and the like. However, this is only an embodiment of the transceiver 1510, and the components of the transceiver 1510 are not limited to the RF transmitter and the RF receiver. In addition, the transceiver 1510 may receive signals through a radio channel, output the same to the processor 1530, and transmit signals output from the processor 1530 through the radio channel.

According to an embodiment, the memory 1520 may store programs and data necessary for operations of the UE. In addition, the memory 1520 may store control information or data included in signals transmitted/received by the UE. The memory 1520 may include storage media such as a ROM, a RAM, a hard disk, a CD-ROM, and a DVD, or a combination of storage media. In addition, the memory 1520 may include multiple memories 1520. According to an embodiment, the memory 1520 may store programs for performing transmission and reception operations of the UE according to whether the base station mode in the above-described embodiments of the disclosure is a base station power saving mode or a base station normal mode.

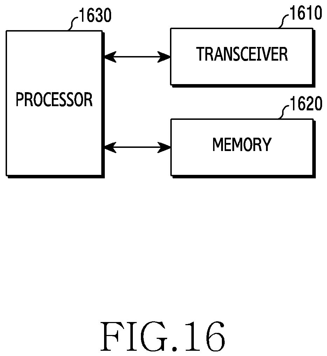

FIG. 16 is a block diagram illustrating a structure of a base station according to an embodiment of the disclosure.

Referring to FIG. 16, a base station of the disclosure may include a processor 1630, a transceiver 1610, and a memory 1620. However, components of the base station are not limited to the above-described example. For example, the base station may include a larger or smaller number of components than the above-described components. In addition, the processor 1630, the transceiver 1610, and the memory 1620 may be implemented in the form of a single chip.

The processor 1630 may control a series of processes such that the base station can operate according to the above-described embodiments of the disclosure. For example, according to an embodiment of the disclosure, the processor 1630 may control the components of the base station to perform UE scheduling methods according to whether the base station mode is a base station power saving mode or a base station normal mode. The processor 1630 may include one or multiple processors, and the processor 1630 may execute programs stored in the memory 1620 to perform UE scheduling methods according to whether the above-described base station mode is a base station power saving mode or a base station normal mode.

The transceiver 1610 may transmit/receive signals with the UE. The signals transmitted/received with the UE may include control information and data. The transceiver 1610 may include an RF transmitter configured to up-convert and amplify the frequency of transmitted signals, an RF receiver configured to low-noise-amplify received signals and down-convert the frequency thereof, and the like. However, this is only an embodiment of the transceiver 1610, and the components of the transceiver 1610 are not limited to the RF transmitter and the RF receiver. In addition, the transceiver 1610 may receive signals through a radio channel, output the same to the processor 1630, and transmit signals output from the processor 1630 through the radio channel.

According to an embodiment, the memory 1620 may store programs and data necessary for operations of the base station. In addition, the memory 1620 may store control information or data included in signals transmitted/received by the base station. The memory 1620 may include storage media such as a ROM, a RAM, a hard disk, a CD-ROM, and a DVD, or a combination of storage media. In addition, the memory 1620 may include multiple memories. According to an embodiment, the memory 1620 may store programs for performing UE scheduling methods according to whether the base station mode in the above-described embodiments of the disclosure is a base station power saving mode or a base station normal mode.

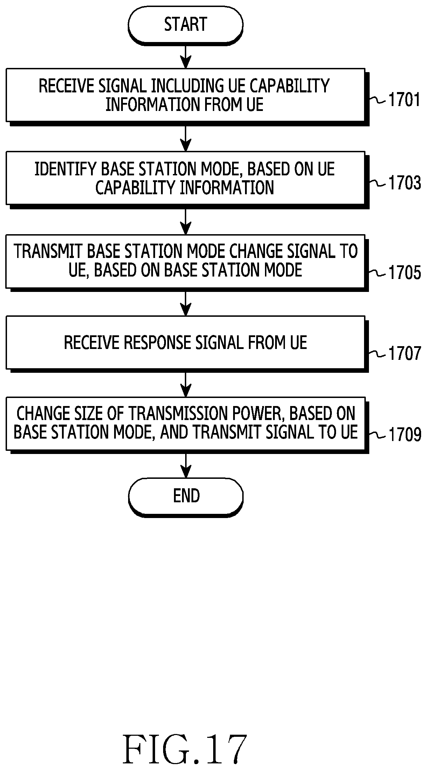

FIG. 17 is a flowchart for describing a base station procedure according to an embodiment of the disclosure.

Referring to FIG. 17, in operation 1701, a base station may receive a signal including UE capability information from a UE. The UE capability information may include at least one of support information on an energy saving mode for the base station, control information related to a frequency band supported by the UE, and power information on a channel bandwidth supported by the UE.

In operation 1703, the base station may identify a base station mode, based on the UE capability. For example, the base station mode may be one of an energy saving mode for the base station or a normal mode for the base station. According to the change of the base station mode, at least one of information on base station transmission power, configuration information on a physical channel and a physical signal, the transmission characteristic of which is changed, and UE measurement configuration information for measurement reporting may be changed. In addition, it is also possible that information which may be included according to the change of the base station mode is configured for the UE through higher signaling in advance. The size of the transmission power in the energy saving mode for the base station may be configured to be smaller than that of the transmission power in the normal mode for the base station.

In operation 1705, the base station may transmit a base station mode change signal to the UE, based on the base station mode. For example, the base station mode change signal may be one of a signal that changes the UE from the existing mode to the energy saving mode for the base station, or a signal that changes the UE from the existing mode to the normal mode for the base station. The existing mode may be one of the energy saving mode for the base station or the normal mode for the base station.

In operation 1707, the base station may receive a response signal from the UE.

In operation 1709, the base station may change the size of the transmission power, based on the base station mode, and transmit a signal to the UE. For example, the base station mode may be one of the energy saving mode for the base station or the normal mode for the base station. According to the change of the base station mode, at least one of information on base station transmission power, configuration information on a physical channel and a physical signal, the transmission characteristic of which is changed, and UE measurement configuration information for measurement reporting may be changed. In addition, it is also possible that information which may be included according to the change of the base station mode is configured for the UE through higher signaling in advance. The size of the transmission power in the energy saving mode for the base station may be configured to be smaller than that of the transmission power in the normal mode for the base station.

According to various embodiments of the disclosure, a method performed by a terminal in a wireless communication system may include transmitting, to a base station, a signal including capability (UE capability) information of the terminal, the capability information of the terminal including information relating to whether the terminal supports a first mode corresponding to an energy saving mode of the base station,

Receiving, from the base station, information on a mode of the base station in response to the capability information of the terminal, the information on the mode of the base station including at least one of information indicating that the mode of the base station is the first mode and information indicating that the mode of the base station is a second mode corresponding to a normal mode, transmission power of the base station in the first mode being smaller than that of the base station in the second mode, updating a configuration of the terminal, based on the information on the mode of the base station such that the terminal is able to communicate with the base station in the first mode or the base station in the second mode, receiving a first signal from the base station, based on the updated configuration of the terminal, and transmitting a second signal to the base station in response to the first signal.

According to an embodiment of the disclosure, in case that the mode of the base station is the first mode,

Transmission power of the first signal may be based on adjustment of at least one of transmission power of a secondary synchronization signal (SSS) transmitted by the base station, transmission power related to a channel status information-reference signal (CSI-RS), transmission power related to a physical downlink shared channel (PDSCH) transmitted by the base station, transmission power related to a phase tracking reference signal (PTRS), or transmission power related to a PDSCH demodulation reference signal (DMRS).

According to an embodiment of the disclosure, the transmission power related to the CSI-RS transmitted by the base station may be determined according to a use of the CSI-RS, and the use of the CSI-RS may include at least one of a reference signal for the terminal to measure a channel status of a downlink, a reference signal for the terminal to track at least one of time or frequency of the downlink, a reference signal for supporting mobility of the terminal, a reference signal for supporting rapid activation of a secondary cell (SCell) by the terminal, and a reference signal for the terminal to measure interference of the downlink.

According to an embodiment of the disclosure, in case that the mode of the base station is the first mode, a measurement reporting value for the base station and a threshold value corresponding to a condition of reporting measurement for the base station may be adjusted.

According to an embodiment of the disclosure, in case that the mode of the base station is the first mode, transmission power of the first signal may be based on adjustment of at least one of transmission power related to a terminal-specific (UE-specific) PDSCH transmitted by the base station, and transmission power related to a UE-specific physical downlink control channel (PDCCH), a UE-specific PDSCH DMRS, or a UE-specific PDCCH DMRS, except for transmission power of a downlink common signal.

According to various embodiments of the disclosure, a method performed by a base station in a wireless communication system may include receiving, from a terminal, a signal including capability (UE capability) information of the terminal, the capability information of the terminal including information relating to whether the terminal supports a first mode corresponding to an energy saving mode of the base station, transmitting, to the terminal, information on a mode of the base station in response to the capability information of the terminal, the information on the mode of the base station including at least one of information indicating that the mode of the base station is the first mode and information indicating that the mode of the base station is a second mode corresponding to a normal mode, transmission power of the base station in the first mode being smaller than that of the base station in the second mode, adjusting transmission power, based on the information on the mode of the base station, transmitting a first signal to the terminal, based on the adjusted transmission power, and receiving a second signal from the terminal in response to the first signal.

According to an embodiment of the disclosure, in case that the mode of the base station is the first mode, the adjusting of the transmission power, based on the information on the mode of the base station may include adjusting at least one of transmission power of a secondary synchronization signal (SSS) transmitted by the base station, transmission power related to a channel status information-reference signal (CSI-RS), transmission power related to a physical downlink shared channel (PDSCH), transmission power related to a phase tracking reference signal (PTRS), or transmission power related to a PDSCH demodulation reference signal (DMRS).

According to an embodiment of the disclosure, the transmission power related to the CSI-RS transmitted by the base station may be determined according to a use of the CSI-RS, and the use of the CSI-RS may include at least one of a reference signal for the terminal to measure a channel status of a downlink, a reference signal for the terminal to track at least one of time or frequency of the downlink, a reference signal for supporting mobility of the terminal, a reference signal for supporting rapid activation of a secondary cell (SCell) by the terminal, and a reference signal for the terminal to measure interference of the downlink.

According to an embodiment of the disclosure, in case that the mode of the base station is the first mode, a measurement reporting value for the base station and a threshold value corresponding to a condition of reporting measurement for the base station may be adjusted.

According to an embodiment of the disclosure, in case that the mode of the base station is the first mode, the adjusting of the transmission power, based on the information on the mode of the base station may include adjusting at least one of transmission power related to a terminal-specific (UE-specific) PDSCH transmitted by the base station, and transmission power related to a UE-specific physical downlink control channel (PDCCH), a UE-specific PDSCH DMRS, or a UE-specific PDCCH DMRS, except for transmission power of a downlink common signal.

According to various embodiments of the disclosure, a terminal in a wireless communication system may include a transceiver, and at least one processor connected to the transceiver, wherein the at least one processor is configured to transmit, to a base station, a signal including capability (LTE capability) information of the terminal, the capability information of the terminal including information relating to whether the terminal supports a first mode corresponding to an energy saving mode of the base station, receive, from the base station, information on a mode of the base station in response to the capability information of the terminal, the information on the mode of the base station including at least one of information indicating that the mode of the base station is the first mode and information indicating that the mode of the base station is a second mode corresponding to a normal mode, transmission power of the base station in the first mode being smaller than that of the base station in the second mode, update a configuration of the terminal, based on the information on the mode of the base station such that the terminal is able to communicate with the base station in the first mode or the base station in the second mode, receive a first signal from the base station, based on the updated configuration of the terminal, and transmit a second signal to the base station in response to the first signal.

According to various embodiments of the disclosure, a base station in a wireless communication system may be configured to receive, from a terminal, a signal including capability (UE capability) information of the terminal, the capability information of the terminal including information relating to whether the terminal supports a first mode corresponding to an energy saving mode of the base station, transmit, to the terminal, information on a mode of the base station in response to the capability information of the terminal, the information on the mode of the base station including at least one of information indicating that the mode of the base station is the first mode and information indicating that the mode of the base station is a second mode corresponding to a normal mode, transmission power of the base station in the first mode being smaller than that of the base station in the second mode, adjust transmission power, based on the information on the mode of the base station, transmit a first signal to the terminal, based on the adjusted transmission power, and receive a second signal from the terminal in response to the first signal.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

In addition, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. Although particular terms are used, they have been used in a general sense merely to easily explain the technical contents of the disclosure and help understanding of the disclosure, and are not intended to limit the scope of the disclosure. Also, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. In addition, the embodiments of the disclosure may be applied to other communication systems and other variants based on the technical idea of the embodiments may also be implemented.

## Claims

1. A method performed by a terminal in a wireless communication system, the method comprising:

   transmitting, to a base station, a signal including capability (UE capability) information of the terminal, the capability information of the terminal including information relating to whether the terminal supports a first mode corresponding to an energy saving mode of the base station;
   receiving, from the base station, information on a mode of the base station in response to the capability information of the terminal, the information on the mode of the base station including at least one of information indicating that the mode of the base station is the first mode and information indicating that the mode of the base station is a second mode corresponding to a normal mode, transmission power of the base station in the first mode being smaller than that of the base station in the second mode;
   updating a configuration of the terminal, based on the information on the mode of the base station such that the terminal is able to communicate with the base station in the first mode or the base station in the second mode;
   receiving a first signal from the base station, based on the updated configuration of the terminal; and
   transmitting a second signal to the base station in response to the first signal.

2. The method of claim 1, wherein, in case that the mode of the base station is the first mode, transmission power of the first signal is based on adjustment of at least one of transmission power of a secondary synchronization signal (SSS) transmitted by the base station, transmission power related to a channel status information-reference signal (CSI-RS), transmission power related to a physical downlink shared channel (PDSCH) transmitted by the base station, transmission power related to a phase tracking reference signal (PTRS), or transmission power related to a PDSCH demodulation reference signal (DMRS).

3. The method of claim 2, wherein the transmission power related to the CSI-RS transmitted by the base station is determined according to a use of the CSI-RS, and
wherein the use of the CSI-RS comprises at least one of a reference signal for the terminal to measure a channel status of a downlink, a reference signal for the terminal to track at least one of time or frequency of the downlink, a reference signal for supporting mobility of the terminal, a reference signal for supporting rapid activation of a secondary cell (SCell) by the terminal, and a reference signal for the terminal to measure interference of the downlink.

4. The method of claim 1, wherein, in case that the mode of the base station is the first mode, a measurement reporting value for the base station and a threshold value corresponding to a condition of reporting measurement for the base station are adjusted.

5. The method of claim 1, wherein, in case that the mode of the base station is the first mode, transmission power of the first signal is based on adjustment of at least one of transmission power related to a terminal-specific (UE-specific) PDSCH transmitted by the base station, and transmission power related to a UE-specific physical downlink control channel (PDCCH), a UE-specific PDSCH DMRS, or a UE-specific PDCCH DMRS, except for transmission power of a downlink common signal.

6. A method performed by a base station in a wireless communication system, the method comprising:

receiving, from a terminal, a signal including capability (UE capability) information of the terminal, the capability information of the terminal including information relating to whether the terminal supports a first mode corresponding to an energy saving mode of the base station;
transmitting, to the terminal, information on a mode of the base station in response to the capability information of the terminal, the information on the mode of the base station including at least one of information indicating that the mode of the base station is the first mode and information indicating that the mode of the base station is a second mode corresponding to a normal mode, transmission power of the base station in the first mode being smaller than that of the base station in the second mode;
adjusting transmission power, based on the information on the mode of the base station;
transmitting a first signal to the terminal, based on the adjusted transmission power; and
receiving a second signal from the terminal in response to the first signal.

7. The method of claim 6, wherein, in case that the mode of the base station is the first mode, the adjusting of the transmission power, based on the information on the mode of the base station comprises adjusting at least one of transmission power of a secondary synchronization signal (SSS) transmitted by the base station, transmission power related to a channel status information-reference signal (CSI-RS), transmission power related to a physical downlink shared channel (PDSCH), transmission power related to a phase tracking reference signal (PTRS), or transmission power related to a PDSCH demodulation reference signal (DMRS).

8. The method of claim 7, wherein the transmission power related to the CSI-RS transmitted by the base station is determined according to a use of the CSI-RS, and
wherein the use of the CSI-RS comprises at least one of a reference signal for the terminal to measure a channel status of a downlink, a reference signal for the terminal to track at least one of time or frequency of the downlink, a reference signal for supporting mobility of the terminal, a reference signal for supporting rapid activation of a secondary cell (SCell) by the terminal, and a reference signal for the terminal to measure interference of the downlink.

9. The method of claim 6, wherein, in case that the mode of the base station is the first mode, a measurement reporting value for the base station and a threshold value corresponding to a condition of reporting measurement for the base station are adjusted.

10. The method of claim 6, wherein, in case that the mode of the base station is the first mode, the adjusting of the transmission power, based on the information on the mode of the base station comprises adjusting at least one of transmission power related to a terminal-specific (UE-specific) PDSCH transmitted by the base station, and transmission power related to a UE-specific physical downlink control channel (PDCCH), a UE-specific PDSCH DMRS, or a UE-specific PDCCH DMRS, except for transmission power of a downlink common signal.

**11.** A terminal in a wireless communication system, the terminal comprising:

a transceiver; and
at least one processor connected to the transceiver,
wherein the at least one processor is configured to:

transmit, to a base station, a signal including capability (UE capability) information of the terminal, the capability information of the terminal including information relating to whether the terminal supports a first mode corresponding to an energy saving mode of the base station;
receive, from the base station, information on a mode of the base station in response to the capability information of the terminal, the information on the mode of the base station including at least one of information indicating that the mode of the base station is the first mode and information indicating that the mode of the base station is a second mode corresponding to a normal mode, transmission power of the base station in the first mode being smaller than that of the base station in the second mode;
update a configuration of the terminal, based on the information on the mode of the base station such that the terminal is able to communicate with the base station in the first mode or the base station in the second mode;
receive a first signal from the base station, based on the updated configuration of the terminal; and
transmit a second signal to the base station in response to the first signal.

**12.** The terminal of claim 11, wherein, in case that the mode of the base station is the first mode, transmission power of the first signal is based on adjustment of at least one of transmission power of a secondary synchronization signal (SSS) transmitted by the base station, transmission power related to a channel status information-reference signal (CSI-RS), transmission power related to a physical downlink shared channel (PDSCH) transmitted by the base station, transmission power related to a phase tracking reference signal (PTRS), or transmission power related to a PDSCH demodulation reference signal (DMRS).

**13.** The terminal of claim 12, wherein the transmission power related to the CSI-RS transmitted by the base station is determined according to a use of the CSI-RS, and
wherein the use of the CSI-RS comprises at least one of a reference signal for the terminal to measure a channel status of a downlink, a reference signal for the terminal to track at least one of time or frequency of the downlink, a reference signal for supporting mobility of the terminal, a reference signal for supporting rapid activation of a secondary cell (SCell) by the terminal, and a reference signal for the terminal to measure interference of the downlink.

**14.** The terminal of claim 11, wherein, in case that the mode of the base station is the first mode,

a measurement reporting value for the base station and a threshold value corresponding to a condition of reporting measurement for the base station are adjusted, and
transmission power of the first signal is based on adjustment of at least one of transmission power related to a terminal-specific (UE-specific) PDSCH transmitted by the base station, and transmission power related to a UE-specific physical downlink control channel (PDCCH), a UE-specific PDSCH DMRS, or a UE-specific PDCCH DMRS, except for transmission power of a downlink common signal.

**15.** A base station in a wireless communication system, wherein the base station is configured to:

receive, from a terminal, a signal including capability (UE capability) information of the terminal, the capability information of the terminal including information relating to whether the terminal supports a first mode corresponding to an energy saving mode of the base station;
transmit, to the terminal, information on a mode of the base station in response to the capability information of the terminal, the information on the mode of the base station including at least one of information indicating that the mode of the base station is the first mode and information indicating that the mode of the base station is a second mode corresponding to a normal mode, transmission power of the base station in the first mode being smaller than that of the base station in the second mode;
adjust transmission power, based on the information on the mode of the base station;
transmit a first signal to the terminal, based on the adjusted transmission power; and
receive a second signal from the terminal in response to the first signal.

Frame (114)

Subframe (105)

. . .       . . .

Slot
(106)

Transmission Bandwidth
$N_{BW}$ Subcarriers (104)

$N^{RB}_{SC}$ Subcarriers (110)

Resource Element
(112)

. . .

. . .

. . .

$N^{slot}_{symb}$ Symbols
(102)

Frequency

Time

FIG.1

SS/PBCH periodicity = P

Half frame = 0.5 ms

SS/PBCH block

| #0 | #1 | #2 | #3 | #4 | ...... | #L-1 |

Time

t2
(202)

t1
(201)

(205)
UE1

(203)

#d0

#d1

#d2 : Beam sweeping

#d3

gNB

#d4

UE2
(206)

(204)

FIG.2

UE                                                              gNB

① ─────── Random Access Preamble ──────▶
                    Message 1
                     (310)

◀─────── Random Access Response ───────  ②
                    Message 2
                     (320)

③ ──────Random Access Transmission─────▶
                    Message 3
                     (330)

◀─────── Random Access Resolution ──────  ④
                    Message 4
                     (340)

# FIG.3

(401)
UE

(402)
gNB

UE CAPABILITY INFORMATION REQUEST
(410)

UE CAPABILITY INFORMATION
(420)

# FIG.4

FIG.5

EP 4 496 388 A1

FIG.6

EP 4 496 388 A1

F1

F2

FIG.7

FIG.8

EP 4 496 388 A1

(901)
"ss-PBCH-Block Power"

(902)
"Power Control Offset SS"

(903)
"Power Control Offset"

SSS — CSI-RS#1 — PDSCH

CSI-RS#2

CSI-RS#3

FIG.9

N  Energy saving mode?  Y

(1002)
Measurement reporting
value set#1
Threshold set#1

(1003)
Measurement reporting
value set#2
Threshold set#2

FIG.10

EP 4 496 388 A1

(1101)

N ← Energy saving mode? → Y

(1102)

Normal processing ← Y Common signal? N

(1103)

(1104)

PDCCH/PDSCCH processing for energy saving mode

# FIG.11

START

REPORT BASE STATION ENERGY SAVING MODE SUPPORTING CAPABILITY OF UE ~1201

RECEIVE BASE STATION MODE CHANGE COMMAND ~1202

RESPOND TO BASE STATION MODE CHANGE COMMAND ~1203

UPDATE UE CONFIGURATION ACCORDING TO CHANGE OF BASE STATION MODE ~1204

PERFORM TRANSMISSION AND RECEPTION ACCORDING TO CHANGED BASE STATION MODE ~1205

END

FIG.12

START

↓

| OBTAIN BASE STATION ENERGY SAVING MODE SUPPORTING CAPABILITY OF UE | ∼1301 |

↓

| COMMAND TO CHANGE BASE STATION MODE | ∼1302 |

↓

| OBTAIN BASE STATION MODE CHANGE COMMAND RESPONSE | ∼1303 |

↓

| PERFORM SCHEDULING ACCORDING TO CHANGE OF BASE STATION MODE | ∼1304 |

↓

END

# FIG.13

FIG.14

EP 4 496 388 A1

FIG.15

FIG.16

```
          ┌─────────────┐
          │    START    │
          └──────┬──────┘
                 ▼
   ┌──────────────────────────────────┐
   │ RECEIVE SIGNAL INCLUDING UE       │
   │ CAPABILITY                        │~1701
   │ INFORMATION FROM UE               │
   └──────────────┬───────────────────┘
                  ▼
   ┌──────────────────────────────────┐
   │ IDENTIFY BASE STATION MODE, BASED │
   │ ON UE                             │~1703
   │ CAPABILITY INFORMATION            │
   └──────────────┬───────────────────┘
                  ▼
   ┌──────────────────────────────────┐
   │ TRANSMIT BASE STATION MODE CHANGE │
   │ SIGNAL TO                         │~1705
   │ UE, BASED ON BASE STATION MODE    │
   └──────────────┬───────────────────┘
                  ▼
   ┌──────────────────────────────────┐
   │ RECEIVE RESPONSE SIGNAL FROM UE   │~1707
   └──────────────┬───────────────────┘
                  ▼
   ┌──────────────────────────────────┐
   │ CHANGE SIZE OF TRANSMISSION POWER,│
   │ BASED ON                          │~1709
   │ BASE STATION MODE, AND TRANSMIT   │
   │ SIGNAL TO UE                      │
   └──────────────┬───────────────────┘
                  ▼
          ┌─────────────┐
          │     END     │
          └─────────────┘
```

# FIG.17

## INTERNATIONAL SEARCH REPORT

| International application No. |
|---|
| **PCT/KR2023/005436** |

| A. | CLASSIFICATION OF SUBJECT MATTER |
|---|---|

**H04W 52/02**(2009.01)i; **H04W 8/24**(2009.01)i; **H04W 88/08**(2009.01)i

According to International Patent Classification (IPC) or to both national classification and IPC

| B. | FIELDS SEARCHED |
|---|---|

Minimum documentation searched (classification system followed by classification symbols)

H04W 52/02(2009.01); H04B 7/04(2006.01); H04B 7/06(2006.01); H04W 76/10(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 단말(UE), 능력 정보(capability information), 전력 절감(power reduction), 모드 (mode), 업데이트(update)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2017-0075745 A (QUALCOMM INCORPORATED) 03 July 2017 (2017-07-03) See paragraphs [0047]-[0051], [0113]-[0114], [0165] and [0203]. | 1,6,11,15 |
| Y | | 2-3,7-8,12-13 |
| A | | 4-5,9-10,14 |
| Y | KR 10-1767997 B1 (SAMSUNG ELECTRONICS CO., LTD.) 14 August 2017 (2017-08-14) See claim 1. | 2-3,7-8,12-13 |
| A | KR 10-2021-0012304 A (SAMSUNG ELECTRONICS CO., LTD.) 03 February 2021 (2021-02-03) See paragraphs [0354]-[0355]; and figure 15. | 1-15 |
| A | KR 10-2011-0093054 A (SAMSUNG ELECTRONICS CO., LTD.) 18 August 2011 (2011-08-18) See paragraphs [0030]-[0043]; and figures 3-4. | 1-15 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **24 July 2023** | **24 July 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/005436** |

| C. | DOCUMENTS CONSIDERED TO BE RELEVANT | |
| --- | --- | --- |
| Category* | Citation of document, with indication, where appropriate, of the relevant passages | Relevant to claim No. |
| A | KR 10-2022846 B1 (KT CORPORATION) 20 September 2019 (2019-09-20)<br>See paragraphs [0134]-[0157]; and figures 3-4. | 1-15 |

Form PCT/ISA/210 (second sheet) (July 2022)

## INTERNATIONAL SEARCH REPORT
### Information on patent family members

| | International application No. |
|---|---|
| | **PCT/KR2023/005436** |

| Patent document cited in search report | | | Publication date (day/month/year) | Patent family member(s) | | | Publication date (day/month/year) |
|---|---|---|---|---|---|---|---|
| KR | 10-2017-0075745 | A | 03 July 2017 | CN | 107113725 | A | 29 August 2017 |
| | | | | CN | 107113725 | B | 28 April 2020 |
| | | | | EP | 3213563 | A1 | 06 September 2017 |
| | | | | EP | 3213563 | B1 | 28 November 2018 |
| | | | | EP | 3445098 | A1 | 20 February 2019 |
| | | | | JP | 2017-539121 | A | 28 December 2017 |
| | | | | JP | 2019-220988 | A | 26 December 2019 |
| | | | | JP | 6585170 | B2 | 02 October 2019 |
| | | | | JP | 6908661 | B2 | 28 July 2021 |
| | | | | KR | 10-2019-0119177 | A | 21 October 2019 |
| | | | | KR | 10-2034358 | B1 | 18 October 2019 |
| | | | | KR | 10-2318708 | B1 | 27 October 2021 |
| | | | | US | 10405278 | B2 | 03 September 2019 |
| | | | | US | 2016-0127997 | A1 | 05 May 2016 |
| | | | | US | 2019-0342836 | A1 | 07 November 2019 |
| | | | | US | 2022-0217639 | A1 | 07 July 2022 |
| | | | | WO | 2016-070004 | A1 | 06 May 2016 |
| KR | 10-1767997 | B1 | 14 August 2017 | AU | 2012-273554 | A1 | 22 August 2013 |
| | | | | AU | 2012-273554 | A2 | 13 November 2014 |
| | | | | AU | 2012-273554 | B2 | 26 May 2016 |
| | | | | BR | 112013033312 | A2 | 07 March 2017 |
| | | | | BR | 112013033312 | B1 | 10 May 2022 |
| | | | | CA | 2831028 | A1 | 27 December 2012 |
| | | | | CN | 103620977 | A | 05 March 2014 |
| | | | | CN | 103620977 | B | 09 August 2019 |
| | | | | CN | 110266410 | A | 20 September 2019 |
| | | | | CN | 110266410 | B | 14 June 2022 |
| | | | | EP | 2724477 | A2 | 30 April 2014 |
| | | | | EP | 2724477 | B1 | 31 March 2021 |
| | | | | EP | 3836434 | A1 | 16 June 2021 |
| | | | | JP | 2014-524182 | A | 18 September 2014 |
| | | | | JP | 2018-101983 | A | 28 June 2018 |
| | | | | JP | 6983669 | B2 | 17 December 2021 |
| | | | | RU | 2013139299 | A | 27 February 2015 |
| | | | | RU | 2617997 | C2 | 02 May 2017 |
| | | | | US | 10009903 | B2 | 26 June 2018 |
| | | | | US | 11109385 | B2 | 31 August 2021 |
| | | | | US | 2012-0327800 | A1 | 27 December 2012 |
| | | | | US | 2018-0310318 | A1 | 25 October 2018 |
| | | | | WO | 2012-177092 | A2 | 27 December 2012 |
| | | | | WO | 2012-177092 | A3 | 04 April 2013 |
| | | | | ZA | 201307097 | B | 24 June 2015 |
| | | | | ZA | 201408309 | B | 31 August 2016 |
| KR | 10-2021-0012304 | A | 03 February 2021 | US | 2022-0256458 | A1 | 11 August 2022 |
| | | | | WO | 2021-015475 | A1 | 28 January 2021 |
| KR | 10-2011-0093054 | A | 18 August 2011 | US | 2011-0195741 | A1 | 11 August 2011 |
| | | | | US | 8565827 | B2 | 22 October 2013 |
| KR | 10-2022846 | B1 | 20 September 2019 | US | 10440691 | B2 | 08 October 2019 |
| | | | | US | 2018-0098311 | A1 | 05 April 2018 |

Form PCT/ISA/210 (patent family annex) (July 2022)